# FASCICULE DE BREVET EUROPEEN

(11) **EP 3 563 233 B1**
(45) Date de publication et mention de la délivrance du brevet: **27.07.2022**
(21) Numéro de dépôt: 17832310.1
(22) Date de dépôt: 28.12.2017
(51) Int. Cl.: H04L 67/1004

(54) **RÉSEAU INFORMATIQUE D'INFRASTRUCTURES DE RESSOURCES DE CALCUL ET PROCÉDÉ D'AFFECTATION DE CES RESSOURCES A DES APPLICATIONS CLIENT**
COMPUTERNETZWERK ZUR BERECHNUNG VON RESSOURCENINFRASTRUKTUREN UND VERFAHREN ZUR ZUWEISUNG DIESER RESSOURCEN ZU CLIENT-ANWENDUNGEN
COMPUTER NETWORK OF COMPUTING RESOURCE INFRASTRUCTURES AND METHOD FOR ALLOCATING THESE RESOURCES TO CLIENT APPLICATIONS

(30) Priorité: 29.12.2016 FR 1663536
(43) Date de publication de la demande: 06.11.2019
(73) Titulaire: Bull SAS, 78340 Les Clayes-sous-Bois (FR)
(72) Inventeur: ALBERTIN, Loic, 38240 Meylan (FR); PELLETIER, Benoît, 38960 Saint Etienne de Crossey (FR)
(74) Mandataire: Plasseraud IP
(86) Numéro de dépôt international: PCT/FR2017/053864
(87) Numéro de publication internationale: WO 2018/122540

(56) Documents cités:
- WO-A1-2011/075150
- ALEXANDRU-FLORIAN ANTONESCU ET AL: "Dynamic Topology Orchestration for Distributed Cloud-Based Applications", NETWORK CLOUD COMPUTING AND APPLICATIONS (NCCA), 2012 SECOND SYMPOSIUM ON, IEEE, 3 décembre 2012 (2012-12-03), pages 116-123, XP032339559, DOI: 10.1109/NCCA.2012.14 ISBN: 978-1-4673-5581-0
- ZHAO XINGYU ET AL: "Computational and communication resource allocation for mobile cooperative cloudlet computing systems", 2015 INTERNATIONAL CONFERENCE ON WIRELESS COMMUNICATIONS & SIGNAL PROCESSING (WCSP), IEEE, 15 octobre 2015 (2015-10-15), pages 1-5, XP032820560, DOI: 10.1109/WCSP.2015.7341155

## Description

### DOMAINE DE L'INVENTION

L'invention concerne le domaine des réseaux informatiques comprenant un groupe de plusieurs infrastructures de ressources de calcul, ainsi que le domaine des procédés de décision d'affectation de ressources de calcul, de l'une ou de l'autre des infrastructures de ressources de calcul d'un même groupe d'infrastructures d'un réseau informatique, à tout ou partie d'une application client pour l'héberger.

### CONTEXTE DE L'INVENTION

Pour son exécution une application logicielle peut dépendre d'autres composants logiciels de base, par exemple d'un support d'exécution Java, d'une base de données Oracle, ainsi que de services et ressources d'infrastructures, par exemple d'un dispositif de stockage en mode bloc, d'un système d'équilibrage de charge, d'un réseau Ethernet, d'unités centrales de traitement (CPU pour « central processing unit » en langue anglaise), de mémoires de stockage.

Une application logicielle, encore appelée application client, peut être distribuée et répartie soit sur une même infrastructure, comprenant différentes ressources de calcul d'un centre de données gérées par un même gestionnaire de ressource, soit sur des infrastructures différentes composées d'architectures matérielles hétérogènes sur de multiples localisations. Par exemple, un module d'une application peut tourner sur une infrastructure traditionnelle de centre de données, tandis qu'un autre module peut tourner sur un supercalculateur HPC.

Le déploiement et le provisionnement d'une application logicielle distribuée peuvent être décrits dans un processus complexe de type processus d'étapes (« workflow » en langue anglaise). De même, la gestion autonome de cette application logicielle distribuée, incluant reprise sur erreur, adaptation à la charge, mise à jour de l'application, peut être décrite dans des processus d'étapes.

Un logiciel de type orchestrateur vise à automatiser le déroulement de ces processus de provisionnement ou de gestion autonomes des applications. Il va gérer les interconnexions entres les modules d'une application répartie sur plusieurs ressources d'une même infrastructure ou bien sur plusieurs ressources appartenant à différentes infrastructures.

Les processus de gestion d'une application sont décrits explicitement soit de manière générique dans l'orchestrateur, soit sous forme de métadonnée associée à l'application.

Dans une infrastructure hybride comprenant une pluralité d'orchestrateurs, un orchestrateur par infrastructure, le déploiement d'une application comporte des étapes de sélection de l'orchestrateur cible ou de l'infrastructure cible, avant l'interaction avec l'orchestrateur retenu. Le processus de sélection peut être déroulé par un humain ou automatisé par un système de règles. Les étapes de sélection de l'orchestrateur cible ou de l'infrastructure cible peuvent se dérouler dans différents types de systèmes.

Dans la suite, on parlera, sauf mention contraire, indifféremment de système ou de réseau.

Selon un premier art antérieur, il est connu un système centralisé de déploiement des applications client sur les infrastructures d'un même groupe dans un réseau informatique. Le réseau informatique peut comporter un ou plusieurs de ces groupes d'infrastructures de ressources de calcul. Le nœud central de ce système centralisé présente l'inconvénient d'être à la fois un goulot d'étranglement pour la vitesse de déploiement des applications client et un point critique de panne (« single point of failure » en langue anglaise). En effet, comme toutes les communications relatives au déploiement des applications client passent par ce nœud central, d'une part le trafic va vite se saturer à ce niveau, et d'autre part une panne à ce niveau bloque le déploiement de toutes les applications client dans toutes les infrastructures. Par ailleurs, l'extensibilité du système nécessite une reconfiguration des règles de ce nœud central. Des exemples de ce premier art antérieur centralisé sont « Apache Brooklyn » (marque déposée), ou « Indigo » (marque déposée).

Selon un deuxième art antérieur, il est connu un système décentralisé de déploiement des applications client sur les infrastructures d'un même groupe dans un réseau informatique. Le réseau informatique peut comporter un ou plusieurs tels groupes d'infrastructures de ressources de calcul. Un système décentralisé est la connexion de plusieurs sous-systèmes centralisés reliés les uns aux autres. Le nœud central de chaque sous-système centralisé présente l'inconvénient d'être à la fois un goulot d'étranglement pour la vitesse de déploiement des applications client et un point critique de panne (« single point of failure » en langue anglaise). En effet, comme toutes les communications relatives au déploiement des applications client, s'effectuant au niveau de ce sous-système centralisé, passent par ce nœud central, d'une part le trafic va vite se saturer à ce niveau, et d'autre part une panne à ce niveau bloque le déploiement de toutes les applications client dans toutes les infrastructures de ce sous-système centralisé, donc bloque en fait le déploiement d'une partie des applications client dans une partie des infrastructures de ce système décentralisé.

Selon un troisième art antérieur, il est connu un système répartissant d'abord de manière prédéterminée des activités fixes sur différentes infrastructures de ressources de calcul. Ensuite, des activités mobiles sont rattachées aux activités fixes sur la base d'un algorithme de placement se déroulant en parallèle sur chaque infrastructure sans partage du résultat d'affectation. En conséquence, d'une part les activités fixes ne sont pas affectées de manière optimisée en fonction de la structure ou de l'état des infrastructures, et d'autre part une même activité mobile peut se retrouver soit dupliquée de manière inutile sur plusieurs infrastructures soit, ce qui est plus grave, hébergée sur aucune infrastructure Selon l'art antérieur "Dynamic Topology Orchestration for Distributed Cloud-Based Applications", NETWORK CLOUD COMPUTING AND APPLICATIONS (NCCA), 2012 SECOND SYMPOSIUM ON, IEEE, du 3 décembre 2012 il est connu de préparer une infrastructure aux caractéristiques requires par une application.

### RESUME DE L'INVENTION

Le but de la présente invention est de fournir un réseau informatique selon la revendication 1 et un procédé de décision d'affectation de ressources de calcul des infrastructures d'un même groupe de ce réseau informatique selon la revendication 16 palliant au moins partiellement les inconvénients précités. Les revendications dépendantes présentent des modes de réalisation préférés de l'invention.

L'invention propose de placer et de répartir des applications client sur différentes infrastructures, par application client entière ou seulement par composant d'application, selon une intelligence distribuée mais synchronisée.

En fait, l'invention propose d'utiliser un réseau informatique distribué pour éviter goulot(s) d'étranglement et point(s) critique(s) de panne, tout en synchronisant et en harmonisant la décision d'affectation de ressources pour que celle-ci soit unifiée et cohérente, empêchant ainsi en particulier qu'une application client soit doublement hébergée sur deux infrastructures ou ne soit hébergée sur aucune infrastructure.

Plus particulièrement, l'invention vise à fournir un réseau informatique d'infrastructures de ressources de calcul et un procédé de décision d'affectation de ces ressources, pour qui, d'une part les évaluations sont distribuées chez les orchestrateurs respectifs de ces infrastructures, ceci afin d'éviter à la fois goulot(s) d'étranglement et point(s) critique(s) de panne, et d'autre part les orchestrateurs sont regroupés en un essaim et reliés entre eux par une interface de coopération sur laquelle un protocole de consensus décide de l'affectation des ressources en fonction de ces évaluations, afin de garantir à la fois l'unicité et la cohérence de l'affectation de ressources qui a été décidée.

Selon des modes de réalisation préférentiels de l'invention, le déploiement d'applications client dans un réseau d'infrastructures de ressources de calcul est réalisé par un essaim intelligent d'orchestrateurs. Chaque orchestrateur évalue séparément un scénario d'hébergement de chaque application client, et pour chaque application client, le meilleur scénario d'hébergement est choisi par consensus entre les orchestrateurs de l'essaim. Ensuite, les applications client sont déployées en parallèle sur leurs infrastructures respectives. Ainsi, ce déploiement est rendu à la fois plus rapide et plus robuste aux défaillances locales au sein du réseau.

Selon des modes de réalisation préférentiels de l'invention, la décision est distribuée, et il n'y a pas de point central et donc pas de point de défaillance unique. De plus, le processus de décision est automatisé et ne nécessite pas d'intervention humaine. Le protocole de consensus utilisé assure une grande robustesse et permet de construire un groupe cohérent avec un état fiable partagé entre les différents orchestrateurs. Par ailleurs, sans point critique de panne et sans goulot d'étranglement, le système permet un meilleur passage à l'échelle. Enfin, le système permet d'adjoindre dynamiquement de nouvelles instances d'orchestrateur, leurs ressources disponibles devenant automatiquement et immédiatement disponibles, ainsi que d'agréger des ressources hétérogènes pour le déploiement d'une application.

Selon des modes de réalisation préférentiels de l'invention, l'extensibilité du système est facilitée, dans la mesure où un nouvel orchestrateur supportant un nouveau type d'infrastructure n'a besoin que de communiquer ses capacités sur son interface de coopération à ses pairs pour être intégré dans l'essaim d'orchestrateurs. De plus, la responsabilité est distribuée, ce qui améliore l'autonomie. Chaque orchestrateur peut même embarquer sa propre logique de calcul de score d'adéquation, avec les spécificités du type d'infrastructure supportée et de son contexte d'exécution, comme par exemple la localisation ou le niveau de saturation. Il existe de surcroît différents canaux de communication possibles pour l'opérateur d'une application client, en fait un canal par orchestrateur. Par ailleurs, il permet l'utilisation de toute la bande passante en termes de capacité de traitements grâce à l'agrégation des capacités de chaque orchestrateur. Enfin, il est plus résistant aux pannes, présente de meilleures performances grâce à la distribution des calculs, et permet même d'avoir une hétérogénéité dans la technologie des différentes infrastructures composant le réseau ou le système.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un ou l'autre des objets précités de l'invention.

De préférence, ledit procédé de décision comprend les étapes successives suivantes : une première étape de demande de déploiement de tout ou partie d'une application client auprès de l'un des orchestrateurs de l'essaim, une deuxième étape de diffusion des besoins de tout ou partie de ladite application client à tous les orchestrateurs de l'essaim, sur leur interface de coopération, une troisième étape de notification de participation ou non aux évaluations par les orchestrateurs de l'essaim, sur leur interface de coopération, une quatrième étape de réalisation de l'évaluation par calcul d'un score pour tout ou partie de ladite application client par chacun des orchestrateurs participant aux évaluations, une cinquième étape d'accord, par le protocole de consensus, sur le choix de celle des infrastructures du groupe, pour héberger tout ou partie de ladite application client, qui a réalisé le meilleur score, une sixième étape de déploiement de tout ou partie de ladite application sur l'infrastructure choisie.

Ainsi, les évaluations et les informations utilisées pour ces évaluations sont distribuées, tandis que les résultats de ces évaluations sont synchronisés et harmonisés de manière à ce que la décision finale d'affectation de ressources d'une infrastructure choisie à une application client requérante soit à la fois unifiée et optimisée en termes d'adéquation entre l'application requérante et l'infrastructure de ressources choisie.

De préférence, toute l'application client est évaluée en une seule fois et est affectée à une seule infrastructure.

Ainsi, l'évaluation est plus simple et plus rapide.

De préférence, chaque composant de l'application client est évalué séparément et est affecté à une seule infrastructure, deux composants distincts d'une même application client pouvant être affectés respectivement à deux infrastructures différentes du groupe, un composant d'application client étant une unité de déploiement de cette application sur l'une des infrastructures du groupe, un composant étant de préférence une machine physique ou une machine virtuelle ou un conteneur.

Ainsi, l'évaluation est plus optimisée en termes d'adéquation entre l'application requérante et l'infrastructure de ressources choisie, puisqu'elle n'est pas seulement optimisée application client par application client, mais aussi composant d'application client par composant d'application client.

De préférence, ladite étape de déploiement comprend les phases suivantes : une première phase de lancement de plusieurs déploiements de plusieurs composants distincts d'une même application client réalisés en parallèle sur plusieurs infrastructures différentes choisies dans un même groupe, une deuxième phase de synchronisation desdits déploiements entre eux, au cours desdits déploiements, une troisième phase de mise à jour des relations entre les différents composants de cette même application client hébergés sur les différentes infrastructures de ce même groupe, une quatrième phase de requête de compte-rendu des déploiements, par un opérateur de l'application client, auprès de l'un des orchestrateurs de l'essaim, une cinquième phase d'accès à l'état des déploiements, par l'intermédiaire de l'interface de coopération, par cet orchestrateur, une sixième phase d'envoi de compte-rendu de l'état des déploiements, par cet orchestrateur, vers l'opérateur de l'application client.

Ainsi, le déploiement de plusieurs applications client, voire de nombreuses applications client, dans un même réseau informatique, est à la fois efficace et rapide.

De préférence, plusieurs desdites, de préférence toutes les, infrastructures d'un même groupe pouvant héberger les différents composants d'une même application client sont hétérogènes entre elles.

Ainsi, l'optimisation du déploiement des différents composants d'une même application client est encore plus intéressante en termes d'adéquation entre l'application requérante et l'infrastructure de ressources choisie, puisque certains composants d'une même application client ont des besoins très différents, ce qui réduirait leur efficacité de fonctionnement s'ils devaient être déployés sur un seul et même type d'infrastructure de ressources de calcul.

De préférence, ledit calcul de score pour un composant d'une application client intègre aussi le score des autres composants de la même application client de manière à privilégier la localisation des différents composants d'une même application client sur la même infrastructure.

Ainsi, lorsque les composants d'une même application client n'ont toutefois pas des besoins très différents les uns des autres, afin d'améliorer la vitesse et la fréquence de communication entre ces différents composants lors du fonctionnement de leur application client, la co-localisation, c'est-à-dire la localisation des différents composants d'une même application client au niveau d'une même infrastructure de ressources est tout de même privilégiée, surtout si par ailleurs les calculs de score des différents infrastructures donnent des résultats proches ou plus ou moins équivalents entre eux.

De préférence, chaque orchestrateur d'un même groupe embarque sa propre logique de calcul de score pour réaliser une évaluation, intégrant aussi bien la spécificité du type d'infrastructure associée que son contexte d'utilisation.

Ainsi, chaque orchestrateur est à la fois autonome et optimisé pour réaliser chacune de ses évaluations pour chaque application client demandant à être hébergée.

De préférence, un opérateur de l'application client contacte l'un quelconque des orchestrateurs de l'essaim, pour requérir l'hébergement de tout ou partie de ladite application.

Ainsi, quel que soit l'orchestrateur contacté, l'opérateur de l'application client est garanti d'avoir une décision d'affectation de ressources d'une part indépendante de l'orchestrateur contacté et d'autre part optimisée en fonction de ses besoins d'application client.

De préférence, après réception, par un orchestrateur, d'une requête d'hébergement d'une application client, cet orchestrateur diffuse tout ou partie des métadonnées de cette application client aux autres orchestrateurs de l'essaim pour leurs évaluations respectives.

Ainsi, tous les orchestrateurs d'un même essaim voulant participer à l'évaluation des besoins d'une application client requérante, peuvent le faire, car ils reçoivent de manière simple et rapide toutes les informations dont ils ont besoin pour réaliser leur propre évaluation de ces besoins de l'application client requérante.

De préférence, pour réaliser son évaluation de ses possibilités de satisfaire les besoins d'une application client, chaque orchestrateur de l'essaim ouvre une session de durée prédéterminée, éventuellement renouvelable avant fin de sessions, la fin de toutes les sessions des orchestrateurs de l'essaim déclenchant ledit protocole de consensus.

Ainsi, lorsqu'un orchestrateur, soit abandonne une évaluation en cours par décision propre, soit est contraint d'abandonner une évaluation en cours pour une autre cause comme par exemple pour cause de panne de cet orchestrateur ou pour cause de liaison coupée avec les autres orchestrateurs, cet orchestrateur défectueux ne pénalise pas les autres orchestrateurs ayant réussi leur évaluation dans les temps, lesquels autres orchestrateurs seraient sinon obligés d'attendre, éventuellement très longtemps voire indéfiniment, l'orchestrateur défectueux.

De préférence, chaque orchestrateur de l'essaim possède son propre mode d'évaluation de ses possibilités de satisfaire les besoins d'une application client, ce mode d'évaluation étant modifiable auprès de chaque orchestrateur de l'essaim par l'intermédiaire d'un branchement d'un module de logique d'évaluation.

Ainsi, un administrateur du réseau informatique garde la liberté et la possibilité de modifier manuellement les modes d'évaluation de tel ou de tel orchestrateur de l'essaim, en cas de besoin.

De préférence, un orchestrateur peut décider d'abandonner une évaluation en cours pour une application client, si cette application client présente un profil particulier inadapté à l'infrastructure de cet orchestrateur.

Ainsi, cet orchestrateur gagne du temps pour lui et évite de polluer ou de ralentir les autres orchestrateurs mieux adaptés à héberger une application client donnée.

De préférence, un opérateur de l'application client utilise une interface client de l'orchestrateur pour découvrir le type de ressources supportées par l'infrastructure associée à cet orchestrateur et requérir un déploiement d'application à cet orchestrateur.

Ainsi, l'opérateur de l'application client peut pré-choisir l'orchestrateur qui lui semble le plus adapté, pour que si c'est effectivement celui-ci qui est choisi par le protocole de consensus au sein de l'essaim, le déploiement de cette application client sur l'infrastructure de cet orchestrateur d'abord provisoirement pré-choisi par l'opérateur puis définitivement choisi par le protocole de consensus, soit plus immédiat.

De préférence, chaque orchestrateur de l'essaim refuse de participer aux évaluations si ses ressources sont trop limitées ou s'il a été paramétré pour refuser de nouveaux déploiements d'application.

Ainsi, cet orchestrateur gagne du temps pour lui et évite de polluer ou de ralentir les autres orchestrateurs mieux adaptés à héberger une application client donnée.

De préférence, un nouvel orchestrateur communique ses types de ressources et ses capacités sur son interface de coopération aux autres orchestrateurs d'un essaim pour être intégré dans leur essaim.

Ainsi, le reste de l'essaim peut choisir d'accepter ou de refuser ce nouvel orchestrateur, en fonction de ses besoins propres au niveau de l'essaim et de sa stratégie associée.

De préférence, les applications client décrivent, dans le modèle TOSCA, leurs besoins à l'orchestrateur qu'elles contactent. Ce modèle est particulièrement simple et efficace pour décrire les besoins d'une application client d'une manière facilitant ensuite leur évaluation par les différents orchestrateurs d'un même essaim.

De préférence, au moins l'un des, de préférence plusieurs, encore plus de préférence tous les, orchestrateurs de l'essaim incluent chacun : un module de communication avec les autres orchestrateurs de l'essaim sur l'interface de coopération, un module d'interface client pour communiquer avec les opérateurs des applications client, un module de calcul de score pour l'application client dont les besoins lui sont communiqués, un module de déploiement d'une application client sur l'infrastructure associée audit orchestrateur, les modules d'interface client, de calcul de score et de déploiement d'une application communiquant tous avec le module de communication.

Ainsi, cette structure d'orchestrateur optimise la répartition des tâches au sein d'un même orchestrateur, de manière à lui permettre à la fois de réaliser efficacement son évaluation et de la partager rapidement et simplement avec les autres orchestrateurs de l'essaim.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple comparatif d'architectures de réseau informatique.
La figure 2 représente schématiquement un exemple d'association entre orchestrateur et infrastructure dans un réseau informatique selon un mode de réalisation de l'invention.
La figure 3 représente schématiquement un exemple d'essaim d'orchestrateurs dans un réseau informatique selon un mode de réalisation de l'invention.
La figure 4 représente schématiquement un exemple de déploiement d'applications client chacune hébergée sur une même infrastructure dans un réseau informatique selon un mode de réalisation de l'invention.
La figure 5 représente schématiquement un exemple de déroulement du procédé de décision pour héberger des applications client chacune sur une même infrastructure dans un réseau informatique selon un mode de réalisation de l'invention.
La figure 6 représente schématiquement un exemple de résultat de calcul de score au cours du déroulement du procédé de décision pour héberger des applications client chacune sur une même infrastructure dans un réseau informatique selon un mode de réalisation de l'invention.
La figure 7 représente schématiquement un exemple de déploiement d'applications client chacune hébergée sur plusieurs infrastructures différentes dans un réseau informatique selon un mode de réalisation de l'invention.
La figure 8 représente schématiquement un exemple de déroulement d'une première partie du procédé de décision pour héberger des applications client chacune sur plusieurs infrastructures différentes dans un réseau informatique selon un mode de réalisation de l'invention.
La figure 9 représente schématiquement un exemple de déroulement d'une deuxième partie du procédé de décision pour héberger des applications client chacune sur plusieurs infrastructures différentes dans un réseau informatique selon un mode de réalisation de l'invention.
La figure 10 représente schématiquement un autre exemple de déploiement d'applications client chacune hébergée sur plusieurs infrastructures différentes dans un réseau informatique selon un mode de réalisation de l'invention.
La figure 11 représente schématiquement un autre exemple d'essaim d'orchestrateurs dans un réseau informatique selon un mode de réalisation de l'invention.
La figure 12 représente schématiquement une description en langage TOSCA des besoins d'une application client devant être hébergée sur une même infrastructure dans un réseau informatique selon un mode de réalisation de l'invention.
La figure 13 représente schématiquement encore un autre exemple de déploiement d'applications client chacune hébergée sur une même infrastructure dans un réseau informatique selon un mode de réalisation de l'invention.
La figure 14 représente schématiquement le même exemple d'essaim d'orchestrateurs que la figure 11, dans un réseau informatique selon un mode de réalisation de l'invention.
La figure 15 représente schématiquement une description en langage TOSCA des besoins d'une application client devant être hébergée sur plusieurs infrastructures différentes dans un réseau informatique selon un mode de réalisation de l'invention.
La figure 16 représente schématiquement encore un autre exemple de déploiement d'applications client chacune hébergée sur plusieurs infrastructures différentes dans un réseau informatique selon un mode de réalisation de l'invention.
La figure 17 représente schématiquement un exemple de structure des orchestrateurs dans l'exemple d'essaim d'orchestrateurs des figures 11 et 14, dans un réseau informatique selon un mode de réalisation de l'invention.

### DESCRIPTION DETAILLEE DE L'INVENTION

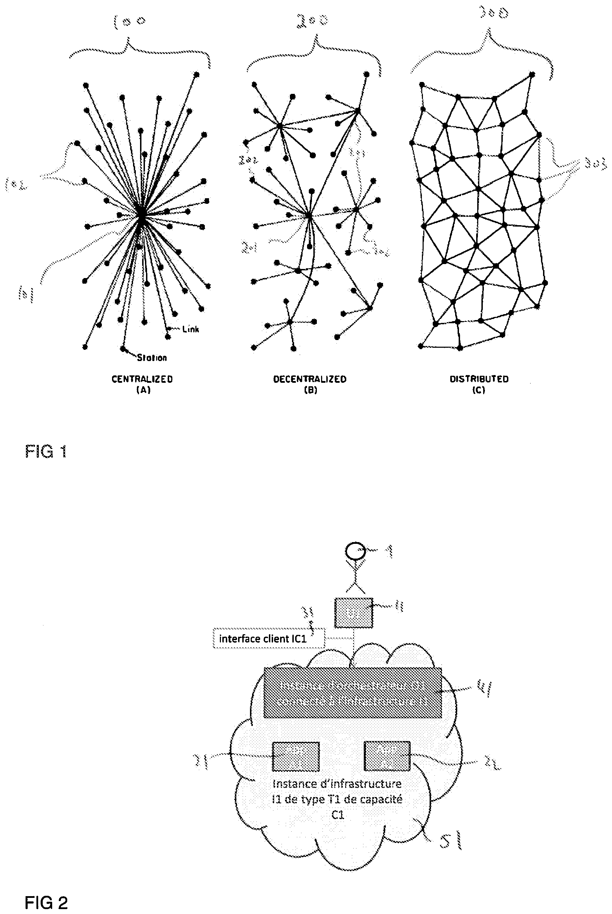

La figure 1 représente schématiquement un exemple comparatif d'architectures de réseau informatique.

Un premier type de réseau informatique 100 centralisé, correspondant au premier art antérieur, comprend un nœud central 101 auquel sont directement reliés tous les nœuds secondaires 102. Toutes les communications entre deux nœuds secondaires 102 passent par le nœud central 101. Le nœud central 101 est donc à la fois un goulot d'étranglement pour la transmission des messages et un point critique de panne car s'il tombe en panne, plus aucun des nœuds secondaires 102 ne peut continuer à communiquer avec les autres nœuds secondaires 102.

Un deuxième type de réseau informatique 200 décentralisé, correspondant au deuxième art antérieur, comprend plusieurs nœuds centraux 201 reliés entre eux, auxquels sont respectivement et directement reliés des groupes de nœuds secondaires 202. Toutes les communications entre deux nœuds secondaires 202 d'un même groupe passent par le nœud central 201 de ce groupe. Toutes les communications entre deux nœuds secondaires 202 de deux groupes différents passent par plusieurs nœuds centraux 201, et peuvent éventuellement emprunter plusieurs chemins différents passant par des nœuds centraux 201 différents. Les nœuds centraux 201 sont donc à la fois des goulots d'étranglement pour la transmission des messages, mais moins que pour le réseau informatique centralisé 100 car pour le réseau informatique décentralisé 200 seule une partie des communications passe par chacun des nœuds centraux 201, et des points critiques de panne, mais moins critiques que pour le réseau informatique centralisé 100 car pour le réseau informatique décentralisé 200 seule une partie des communications passe par chacun des nœuds centraux 201.

Un troisième type de réseau informatique 300 distribué, du type de celui de l'invention, ne comprend que des nœuds simples 303 entre lesquels un maillage assez dense permet à toutes les communications entre deux nœuds simples 303 de pouvoir circuler par de nombreux cheminements, de sorte qu'aucun nœud simple 303 ne puisse devenir un goulot d'étranglement pour la transmission des messages ou un point critique de panne s'il venait à tomber en panne. Le réseau informatique distribué 300 est plus robuste et plus fluide que les réseaux informatiques centralisé 100 et décentralisé 200.

La figure 2 représente schématiquement un exemple d'association entre orchestrateur et infrastructure dans un réseau informatique selon un mode de réalisation de l'invention.

Un opérateur 1 gère une application client depuis un poste utilisateur 11 et communique par une interface client 31 avec un orchestrateur 41 gérant une infrastructure 51 de ressources de calcul, plus précisément avec une instance d'orchestrateur 41 connecté à son infrastructure 51 de ressources. Le but de l'opérateur 1 est d'obtenir l'hébergement de son application client sur l'infrastructure 51, en particulier l'hébergement des composants 21 et 22 de cette application client, c'est-à-dire que des ressources de l'infrastructure 51 soient affectées aux composants 21 et 22 de cette application client.

L'orchestrateur 41 est un élément autonome capable de gérer le déploiement d'une application client sur son infrastructure 51. L'orchestrateur 41 est représenté avec son infrastructure 51 sous-jacente qui lui est connectée et une application client déployée sur cette infrastructure 51. L'orchestrateur 41 supporte le provisionnement de ressources d'infrastructure d'un certain type T1 pour faire fonctionner l'application client hébergée. La limite de capacité Cl dépend des limites de l'infrastructure 51 connectée. Un poste utilisateur 11 du système utilise une interface client 31 pour découvrir les types de ressources supportés par l'interface 51 et soumettre un déploiement d'application client à cet orchestrateur 41.

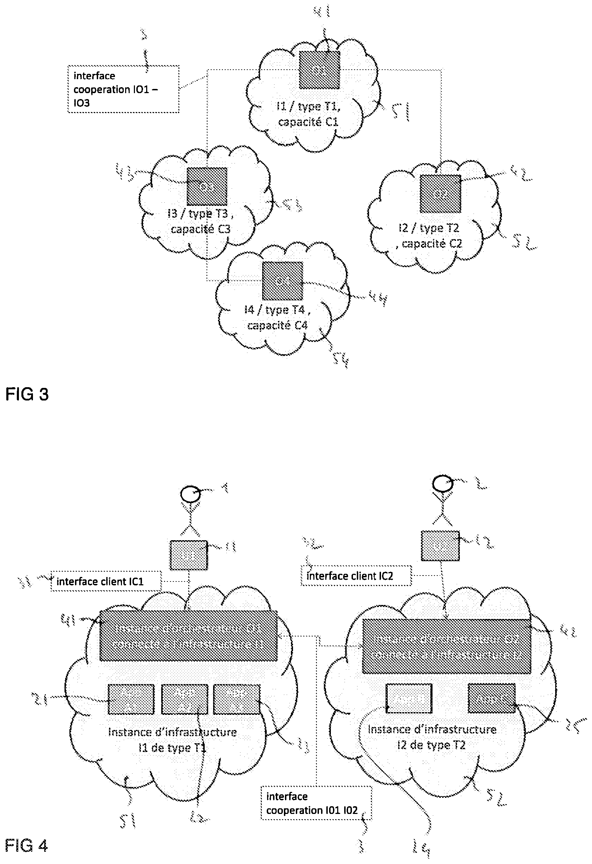

La figure 3 représente schématiquement un exemple d'essaim d'orchestrateurs dans un réseau informatique selon un mode de réalisation de l'invention.

Quatre orchestrateurs 41, 42, 43 et 44, qui forment un essaim d'orchestrateurs, gèrent respectivement quatre infrastructures 51, 52, 53 et 54 qui leur sont associées. Ces quatre orchestrateurs 41 à 44 communiquent entre eux par l'intermédiaire d'une interface de coopération 3 et échangent entre eux les informations qui leur sont nécessaires.

Cet essaim d'orchestrateurs 41 à 44 est constitué en connectant les instances des orchestrateurs 41 à 44. Cela permet d'étendre les capacités de chacun des orchestrateurs 41 à 44 avec les capacités des autres orchestrateurs 41 à 44 qui leur sont connectés directement ou indirectement. Par exemple, les postes utilisateurs de l'orchestrateur 41 pourront bénéficier des ressources des infrastructures sous-jacentes 51 à 54 aux orchestrateurs 42 à 44. Les postes utilisateurs peuvent émettre une requête vers n'importe lequel des orchestrateurs 41 à 44 et bénéficier ainsi des ressources disponibles sur l'ensemble des infrastructures 51 à 54 associées à cet essaim des orchestrateurs 41 à 44.

La figure 4 représente schématiquement un exemple de déploiement d'applications client chacune hébergée sur une même infrastructure dans un réseau informatique selon un mode de réalisation de l'invention. Deux applications client différentes peuvent être hébergées sur deux infrastructures différentes.

Les orchestrateurs 41 et 42, gérant respectivement les infrastructures 51 et 52 de ressources, communiquent entre eux via l'interface de coopération 3. L'essaim formé par les deux orchestrateurs 41 et 42 connectés entre eux supporte le déploiement des différentes applications client sur deux infrastructures 51 et 52.

Un opérateur 1 gère plusieurs applications client depuis un poste utilisateur 11 et communique par une interface client 31 avec un orchestrateur 41 gérant une infrastructure 51 de ressources de calcul. Le but de l'opérateur 1 est d'obtenir l'hébergement de ses applications client sur l'une ou l'autre des infrastructures 51 ou 52, en particulier l'hébergement des composants 21, 22 et 23, d'une première application client ainsi que du seul composant 25 d'une deuxième application client, c'est-à-dire ici que des ressources de l'infrastructure 51 vont être affectées aux composants 21 à 23 de la première application client, tandis que des ressources de l'infrastructure 52 vont être affectées au composant unique 24 de la deuxième application client.

Un opérateur 2 gère une troisième application client depuis un poste utilisateur 12 et communique par une interface client 32 avec un orchestrateur 42 gérant une infrastructure 52 de ressources de calcul. Le but de l'opérateur 2 est d'obtenir l'hébergement de son application client sur l'une ou l'autre des infrastructures 51 ou 52, en particulier l'hébergement du composant unique 25 de la troisième application client, c'est-à-dire ici que des ressources de l'infrastructure 52 vont être affectées au composant unique 25 de la troisième application client.

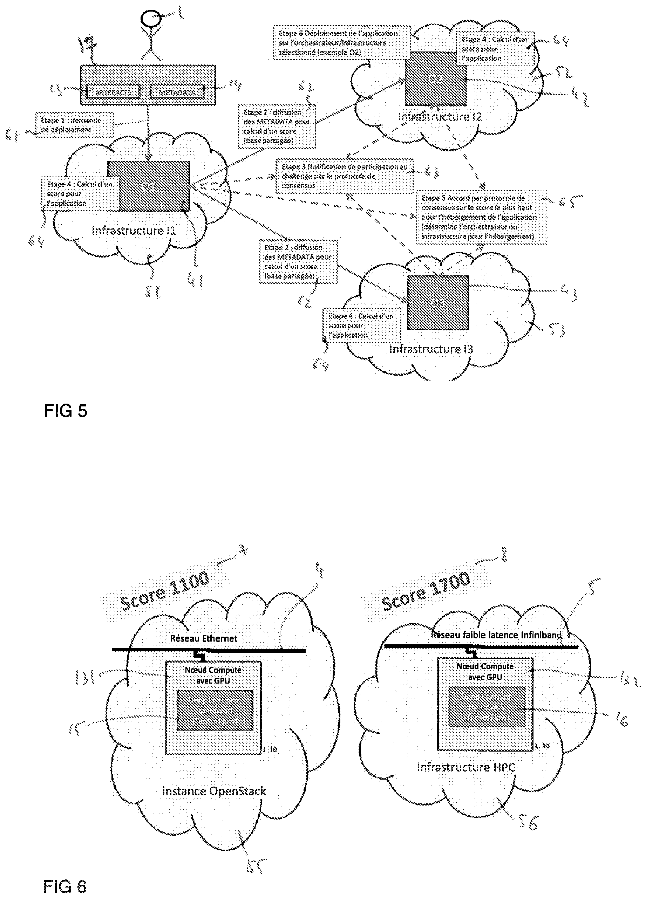

La figure 5 représente schématiquement un exemple de déroulement du procédé de décision pour héberger des applications client chacune sur une même infrastructure dans un réseau informatique selon un mode de réalisation de l'invention.

Trois orchestrateurs 41, 42 et 43, qui forment un essaim, gèrent respectivement trois infrastructures 51, 52 et 53 qui leur sont associées. Ces trois orchestrateurs 41 à 44 communiquent entre eux par l'intermédiaire d'une interface de coopération via un protocole de consensus représenté ici par des flèches en traits pointillés pour le procédé de décision d'affectation de ressources, sauf pour la diffusion des informations concernant les besoins de l'application client 17 qui est représentée ici par des flèches en traits pleins tout en étant réalisée également par l'intermédiaire de l'interface de coopération.

Un opérateur 1 gère une application client 17 et communique avec l'orchestrateur 41. Le but de l'opérateur 1 est d'obtenir l'hébergement de son application client sur l'une ou l'autre des infrastructures 51 à 53. L'application client 17 inclut notamment des artefacts 13 et des métadonnées 14. Les artefacts 13 incluent notamment des informations de configuration, comme par exemple des fichiers de configuration binaires ou comme un script d'installation, ainsi que d'autres objets utiles au déploiement de l'application client 17 sur l'infrastructure retenue. Les métadonnées 14 incluent notamment des descriptions supplémentaires du contexte de l'application client 17, comme par exemple une description de l'environnement dans lequel l'application client 17 va être déployée, une description des caractéristiques de la machine hôte qui va héberger l'application client 17, ou une modélisation du déploiement de l'application client 17.

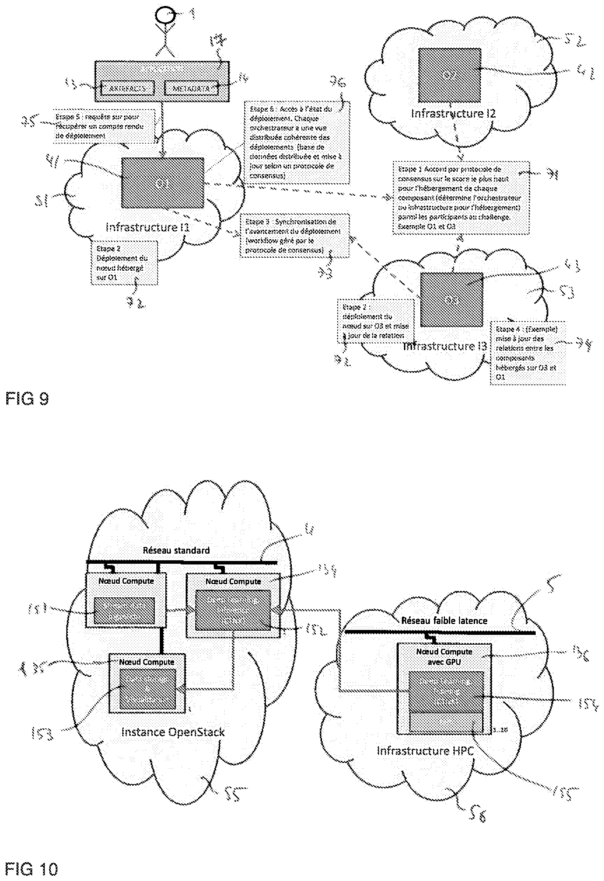

Le procédé de décision comprend les étapes successives suivantes. D'abord, une première étape 61 de demande de déploiement de tout ou partie de l'application client 17 auprès de l'orchestrateur 41. Puis, une deuxième étape 62 de diffusion des besoins de tout ou partie de ladite application client 17 aux orchestrateurs 42 et 43, sur leur interface de coopération. Ensuite, une troisième étape 63 de notification de participation ou non aux évaluations par les orchestrateurs 41 à 43, sur leur interface de coopération. Puis, une quatrième étape 64 de réalisation de l'évaluation par calcul d'un score pour tout ou partie de ladite application client 17 par chacun des orchestrateurs 41 à 43 participant aux évaluations. Ensuite, une cinquième étape 65 d'accord, par le protocole de consensus, sur le choix de celle des infrastructures 51 à 53 du groupe, pour héberger tout ou partie de ladite application client 17, qui a réalisé le meilleur score. Enfin, sera réalisée une sixième étape de déploiement de tout ou partie de ladite application 17 sur l'infrastructure 51 ou 52 ou 53 choisie, cette étape de déploiement étant décrite ultérieurement plus en détail en lien avec la figure 9.

Lorsqu'une application client 17 est soumise à l'orchestrateur 41, un procédé de décision distribué et basé sur un protocole de consensus se déroule pour déterminer l'instance d'orchestrateur 41 à 43 et donc l'infrastructure correspondante 51 à 53 qui gérera l'ensemble des composants ou des modules de cette application client 17. Un composant d'application client 17 est une unité de déploiement de cette application client 17 dans l'infrastructure retenue qui est l'une des infrastructures 51 à 53. Ce composant peut être hébergé par une machine physique, une machine virtuelle ou un conteneur, lesquels sont simplement appelés nœuds de calcul.

Le procédé de décision prend en entrée les métadonnées 14 de l'application client 17, lesquelles métadonnées 14 fournissent :
> une description de l'application client 17 et de sa structure en termes de nœuds et relations, comprenant :
   ∘ des informations relatives aux nœuds :
      ■ au niveau de l'infrastructure en termes de calcul, de stockage et de réseau,
      ■ et au niveau logiciel,
   ∘ des informations relatives aux relations :
      ■ de type « Hébergé sur »,
      ■ de type « Connecté à »,
➢ une liste d'exigences obligatoires globales ou pour chaque nœud, comme notamment le type de machine, par exemple x86 avec processeur graphique, le type de système d'exploitation, par exemple Linux (marque déposée), le type de système de distribution, par exemple Linux (marque déposée) ou Windows (marque déposée),
➢ une liste d'exigences optionnelles globales ou pour chaque nœud et relation, comme notamment la localisation, par exemple en France, le type de support, par exemple MPI (MPI pour « Message Passing Interface » en langue anglaise).

A la réception de ces métadonnées 14, chaque orchestrateur 41 à 43 décide s'il participe à l'évaluation des possibilités de satisfaire aux besoins de cette application client 17, pour déterminer l'instance d'orchestrateur hébergeant le déploiement de cette application client 17. Si l'orchestrateur, par exemple l'orchestrateur 42, choisit de participer à l'évaluation, alors cet orchestrateur 42 ouvre une session à durée de vie limitée qu'il va devoir renouveler régulièrement pour en prolonger la durée de vie, et ceci, tant qu'il n'a pas annoncé par le protocole de consensus les résultats de sa propre évaluation qui est donc sa contribution à l'évaluation globale réalisée par l'ensemble de l'essaim d'orchestrateurs 41 à 43. Si l'orchestrateur 42 subit une panne lors de son calcul, sa session ne sera pas renouvelée et par conséquent sa session sera invalidée à la fin de sa durée de vie. L'évaluation, par tous les orchestrateurs participant au sein de l'essaim, prend fin quand toutes les sessions de participation à cette évaluation sont terminées. Cela permet de définir à quel moment l'évaluation du résultat final peut être déterminée.

Pour chaque orchestrateur participant 41 à 43, son calcul du score d'évaluation de ses capacités de gestion et donc d'hébergement de cette application client 17, s'effectue à partir des métadonnées 14 de cette application client 17, et aussi à partir des capacités disponibles, au moment de l'évaluation, de l'infrastructure 51 à 53 associée à cet orchestrateur 41 à 43, ainsi qu'en tenant compte de son coût horaire moyen normalisé pour être comparable avec les scores calculés pour les autres caractéristiques évaluées.

Les capacités de l'infrastructure 51 à 53 sous-jacente sont notamment : le type de ressources supportées, tant en termes de calcul, que de stockage ou de réseau, son niveau de remplissage (si cette infrastructure 51 à 53 est plus ou moins utilisée), son indicateur de santé (si cette infrastructure 51 à 53 est sujette à des erreurs, et à quelle fréquence).

L'algorithme de calcul parcourt le graphe TOSCA de l'application, nœud par nœud en déroulant, par exemple, la logique qui est représentée dans le tableau 1 suivant :

**TABLEAU 1**

| | |
|---|---|
| | Logique de calcul |
| Valeur initiale | score = 0 |
| Support d'une exigence obligatoire, c'est-à-dire adéquation avec les capacités de l'infrastructure sous-jacente | Si exigence obligatoire supportée, alors score+100 |
| | Sinon, score = 0 et sortie de la logique |
| Support d'une exigence optionnelle, c'est-à-dire adéquation avec les capacités de l'infrastructure sous-jacente | Si exigence optionnelle supportée, alors score+100 |
| Compatibilité avec le niveau de remplissage | Si niveau de remplissage pour ce type de ressource <70%, alors score+100, |
| | si niveau de remplissage >90%, alors score-100, |
| | Sinon, score maintenu |
| Compatibilité avec le niveau de santé global | Si la dernière erreur survenue il y a moins d'une heure, alors score-100, |
| | Si la dernière erreur survenue il y a plus de 24 heures, alors score+100 |
| | Sinon, score maintenu |
| Impact du coût de l'infrastructure | score -10 fois le coût normalisé |

Cette logique de calcul du score est une logique personnalisable par un mécanisme de branchement d'un module logiciel de personnalisation de calcul de score. Cette logique de calcul de score est personnalisable séparément au niveau de chaque orchestrateur 41 à 43.

Les orchestrateurs 41 à 43 décident de l'orchestrateur, par exemple l'orchestrateur 43, qui sera en charge du déploiement selon un protocole de consensus permettant de sélectionner le plus grand score obtenu. Si deux orchestrateurs ont un score identique, l'un de ces deux orchestrateurs est choisi aléatoirement.

La figure 6 représente schématiquement un exemple de résultat de calcul de score au cours du déroulement du procédé de décision pour héberger des applications client chacune sur une même infrastructure dans un réseau informatique selon un mode de réalisation de l'invention.

Une première infrastructure 55 comprend un réseau 4 Ethernet auquel est relié un nœud 131 de calcul avec processeur graphique susceptible d'héberger une application client en lui affectant les ressources 15 si son score 7 calculé est le meilleur.

Une deuxième infrastructure 56 comprend un réseau 5 de faible latence de type « Infiniband » auquel est relié un nœud 132 de calcul avec processeur graphique susceptible d'héberger cette application client en lui affectant les ressources 16 si son score 8 calculé est le meilleur.

Le score 7 d'une valeur par exemple de 1100 étant inférieur au score 8 d'une valeur par exemple de 1700, le protocole de consensus va décider que l'application client sera hébergée sur la deuxième infrastructure 56, au niveau du nœud 132 en lui affectant les ressources 16.

Voici à titre d'illustration un exemple de métadonnées 14 pour une application client 17 de type « apprentissage en profondeur » (« deep learning » en langue anglaise). Les exigences obligatoires sont par exemple : 10 nœuds de calcul de type x86, une image de type Linux (marque déposée), réseau entre les nœuds. Les exigences optionnelles sont par exemple : tous les nœuds de calcul sont équipés d'un processeur graphique, tous les nœuds de calcul sont interconnectés par un réseau faible latence. Le déploiement s'effectue sur un essaim d'orchestrateurs composé de deux orchestrateurs (non représentés sur cette figure par souci de simplicité) et des deux infrastructures 55 et 56 associées sous-jacentes. L'infrastructure 55 est de type « OpenStack » et présente un coût moyen normalisé à 10, tandis que l'infrastructure 56 est à base de technologie « HPC » et présente un coût moyen normalisé à 50. Le niveau de saturation de l'infrastructure 55 est inférieur à 50%, tandis que celui de l'infrastructure 56 est de 80%. Sur aucune des deux infrastructures 55 et 56, il n'y a eu d'erreur récemment.

Le calcul des scores réalisé par les deux orchestrateurs pour leurs deux infrastructures respectives 55 et 56, est décrit dans le tableau 2 suivant :

**TABLEAU 2**

| | Infrastructure 55 | Infrastructure 56 |
|---|---|---|
| Valeur initiale | score = 0 | score=0 |
| Support des exigences obligatoires (10 nœuds) | score +10x100 = score +1000 | score +10x100 = score +1000 |
| Support d'une exigence optionnelle, c'est-à-dire adéquation avec les capacités de l'infrastructure sous-jacente | score +0 (pas de processeur graphique) | score +10^{∗}100 (processeur graphique) = score+1000, puis score+100 (réseau faible latence) |
| Compatibilité avec le niveau de remplissage | score +100 | score +0 |
| Compatibilité avec le niveau de santé global | score +100 | score +100 |
| Impact du cout de l'infrastructure | score -10x10 = score -100 | score -10x50 = score -500 |
| Total des scores | score final = 1100 | score final=1700 |

Le score le plus grand est obtenu par l'orchestrateur associé à l'infrastructure 56, c'est donc lui qui va gérer l'application client « apprentissage en profondeur » qui sera hébergée par l'infrastructure 56.

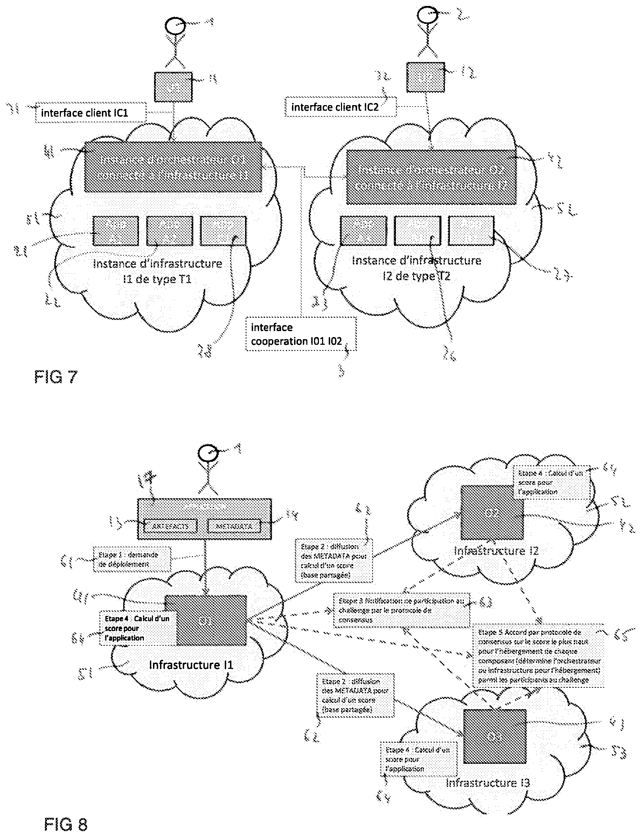

La figure 7 représente schématiquement un exemple de déploiement d'applications client chacune hébergée sur plusieurs infrastructures différentes dans un réseau informatique selon un mode de réalisation de l'invention.

Les orchestrateurs 41 et 42, gérant respectivement les infrastructures 51 et 52 de ressources, communiquent entre eux via l'interface de coopération 3, pour répartir cette fois-ci non pas les applications client en bloc entre les différentes infrastructures 51 et 52, mais pour répartir ces applications client composant par composant entre les différentes infrastructures 51 et 52, certaines applications client ayant leurs différents composants éventuellement répartis entre les deux infrastructures 51 et 52.

Le but des opérateurs 1 et 2 est d'obtenir l'hébergement des différents composants de ses applications client sur l'une ou l'autre des infrastructures 51 ou 52, en particulier l'hébergement des composants 21, 22 et 23, d'une première application client, des composants 26 et 27, d'une deuxième application client, ainsi que du seul composant 28 d'une troisième application client, c'est-à-dire ici que des ressources de l'infrastructure 51 vont être affectées aux deux premiers composants 21 et 22 de la première application client, ainsi qu'au composant unique 28 de la troisième application client, tandis que des ressources de l'infrastructure 52 vont être affectées au troisième composant 23 de la première application client, ainsi qu'aux deux composants 26 et 27 de la deuxième application client.

L'application client est dite «hybride» lorsqu'elle est gérée par plusieurs orchestrateurs et hébergée sur plusieurs infrastructures, préférentiellement de technologies respectives différentes entre elles.

La figure 8 représente schématiquement un exemple de déroulement d'une première partie du procédé de décision pour héberger des applications client chacune sur plusieurs infrastructures différentes dans un réseau informatique selon un mode de réalisation de l'invention.

Le procédé de décision comprend les mêmes étapes successives que sur la figure 5, mais celles-ci sont déroulées successivement, en parallèle pour chaque composant d'application client, et non plus seulement pour chaque application client en bloc.

Lorsqu'une application client 17 est soumise à l'orchestrateur 41, un procédé de décision distribué et basé sur un protocole de consensus se déroule pour déterminer la ou les instances d'orchestrateurs 41 à 43 et d'infrastructures associées 51 à 53 qui gèreront chacun des composants de l'application client 17.

Le procédé de décision distribué se déroule de la même manière qu'au niveau de la figure 5, sauf que le calcul de score de chaque orchestrateur 41 à 43, s'effectue maintenant composant par composant de l'application client 17, et non plus en une seule fois pour l'ensemble de l'application client 17 comme au niveau de la figure 5. De plus, pour un nœud donné, sur une infrastructure donnée, le score des nœuds voisins, c'est-à-dire dépendant directement du nœud donné, peut intervenir dans le calcul du score du nœud donné de façon à privilégier une co-localisation des différents composants de l'application client 17, surtout si le nombre de nœuds et d'infrastructures est important.

La figure 9 représente schématiquement un exemple de déroulement d'une deuxième partie du procédé de décision pour héberger des applications client chacune sur plusieurs infrastructures différentes dans un réseau informatique selon un mode de réalisation de l'invention. La figure 9 représente les différentes phases de l'étape de déploiement qui est réalisée après les autres étapes de déploiement réalisées au niveau de la figure 8. La partie de réseau représentée à la figure 9 est identique à celle représentée à la figure 8.

Cette étape de déploiement comprend les phases suivantes. D'abord, une première phase 71 de lancement de plusieurs déploiements de plusieurs composants distincts d'une même application client réalisés en parallèle sur plusieurs infrastructures différentes 51 à 53 choisies dans un même groupe. Puis, une deuxième phase 72 de synchronisation desdits déploiements entre eux, au cours desdits déploiements. Ensuite, une troisième phase 73 de mise à jour des relations entre les différents composants de cette même application client hébergés sur les différentes infrastructures 51 à 53 de ce même groupe. Puis, une quatrième phase 74 de requête de compte-rendu des déploiements, par l'opérateur 1 de l'application client, auprès de l'orchestrateur 41. Ensuite, une cinquième phase 75 d'accès à l'état des déploiements, par l'intermédiaire de l'interface de coopération (représentée ici par les flèches en traits pointillés), par cet orchestrateur 41. Enfin, une sixième phase 76 d'envoi de compte-rendu de l'état des déploiements, par cet orchestrateur 41, vers l'opérateur 1 de l'application client. Par ailleurs, si plusieurs applications ayant chacune un ou plusieurs composants doivent être déployées, elles peuvent aussi toutes être déployées en parallèle les unes des autres.

Pour le déploiement d'une application client 17 hybride, les orchestrateurs 41 à 43 déroulent de manière distribuée le cycle de vie de l'application client 17. Techniquement, le cycle de vie de l'application est décrit dans un processus d'étapes et constitue l'une des métadonnées 14 de l'application client 17. Ce processus d'étapes est composé d'unités gérant le cycle de vie de chaque composant de l'application client 17 indépendamment les uns des autres. Les transitions du processus d'étapes permettent l'orchestration des relations entre les différents composants d'une même application client 17. Le processus d'étapes est donc réparti sur l'ensemble des orchestrateurs 41 à 43 en charge du déploiement d'unités du processus d'étapes. Chaque orchestrateur 41 à 43 a la responsabilité de dérouler les étapes des composants qui seront hébergés par son infrastructure respective 51 à 53. L'utilisation d'un protocole de consensus permet de synchroniser les étapes et donc de déclencher les transitions du processus d'étapes au moment voulu, c'est-à-dire en ne déclenchant une étape B ayant besoin de l'achèvement préalable de l'étape A que lorsque cette étape A est effectivement achevée.

La figure 10 représente schématiquement un autre exemple de déploiement d'applications client chacune hébergée sur plusieurs infrastructures différentes dans un réseau informatique selon un mode de réalisation de l'invention.

Une première infrastructure 55 comprend un réseau 4 Ethernet auquel sont reliés des nœuds 133, 134 et 135, de calcul susceptible d'héberger des composants d'une application client.

Une deuxième infrastructure 56 comprend un réseau 5 de faible latence auquel est relié un nœud 136 de calcul avec processeur graphique susceptible d'héberger d'autres composants de cette application client.

Le protocole de consensus a décidé que le composant 151 de l'application client sera hébergé sur le nœud 133 de la première infrastructure 55, que le composant 152 de cette application client sera hébergé sur le nœud 134 de la première infrastructure 55, que le composant 155 de cette application client sera hébergé sur le nœud 135 de la première infrastructure 55, que les composants 154 et 155 de cette application client seront hébergés sur le nœud 136 de la deuxième infrastructure 56.

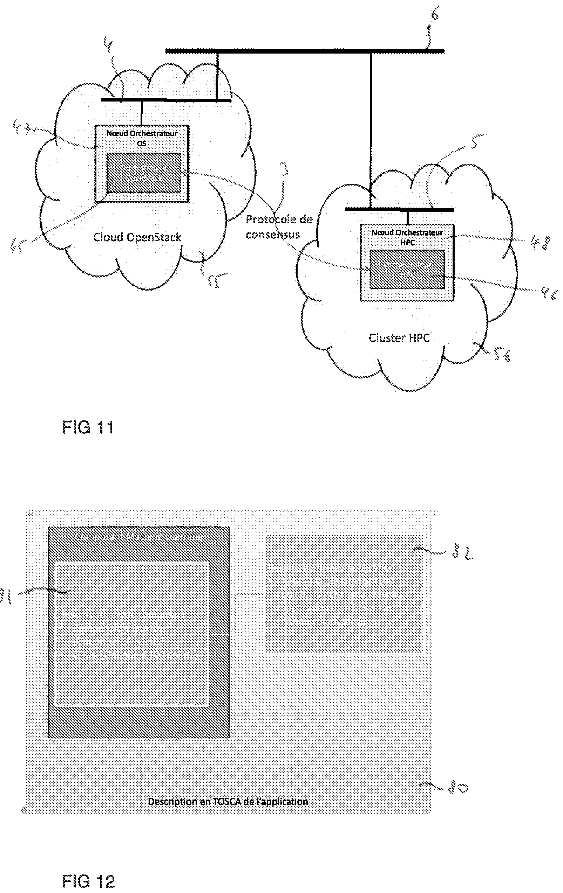

La figure 11 représente schématiquement un autre exemple d'essaim d'orchestrateurs dans un réseau informatique selon un mode de réalisation de l'invention.

Une première infrastructure 55 de type « Cloud OpenStack » comprend un réseau 4 auquel est relié un nœud orchestrateur 47 hébergeant un orchestrateur 45 de type « OpenStack ».

Une deuxième infrastructure 56 de type « Cluster HPC » (HPC pour « High Performance Computing » en langue anglaise) comprend un réseau 5 auquel est relié un nœud orchestrateur 48 hébergeant un orchestrateur 46 de type « HPC ».

Les orchestrateurs 45 et 46 gérant respectivement les infrastructures 55 et 56 de ressources communiquent entre eux via l'interface de coopération 3 sur laquelle se déroule le protocole de consensus. Ces orchestrateurs 45 et 46 forment donc un même essaim d'orchestrateurs.

Ici, l'application client va être déployée d'un seul tenant sur une seule infrastructure. L'application client hébergée sera donc une « application mono-infrastructure ». Les deux instances respectives des orchestrateurs 45 et 46 sont liées entre elles par le protocole de consensus. Le réseau dans son ensemble supporte donc deux infrastructures 55 et 56 aux caractéristiques différentes. D'une part, l'infrastructure 56 offre une importante puissance de calcul et un réseau de communication interne à très haut débit et faible latence mais ceci, pour un coût d'utilisation élevé. A l'inverse, l'infrastructure 55 offre la possibilité de créer de nombreuses machines virtuelles à faible coût, mais avec une puissance de calcul moindre et un réseau plus lent.

Dans le cas d'une application client de type « gros volume de données » (« Big Data » en langue anglaise) avec plusieurs tiers et des caractéristiques différentes. En effet, une application client de type « apprentissage en profondeur » ingère une très grande quantité de données et applique sur ces données des modèles mathématiques nécessitant beaucoup de mémoire et un réseau faible latence pour l'échange de ces données.

La figure 12 représente schématiquement une description en langage TOSCA (TOSCA pour « Topology & Orchestration Spécification for Cloud Application » en langue anglaise) des besoins d'une application client devant être hébergée sur une même infrastructure dans un réseau informatique selon un mode de réalisation de l'invention.

L'application client est décrite dans le langage TOSCA. Chaque composant a son cycle de vie implémenté dans ce langage. Ces composants sont assemblés et mis en relation dans l'application. Les caractéristiques des composants, comme par exemple leur puissance de calcul nécessaire ou bien leur type de réseau, sont eux aussi exprimés en langage TOSCA, au niveau composant et/ou au niveau application, ce niveau application pouvant surcharger le niveau composant.

Cette description 80 comprend une description 81 des besoins au niveau composant et une description 82 des besoins au niveau application.

La description 81 des besoins au niveau composant spécifie un réseau de faible latence, ce qui augmente le score de 10 points, ainsi que la présence d'un processeur graphique, ce qui augmente le score de 100 points.

La description 82 des besoins au niveau application spécifie à nouveau un réseau de faible latence, ce qui augmente encore le score de 10 points : c'est un exemple de surcharge au niveau application d'un besoin déjà spécifié au niveau composant.

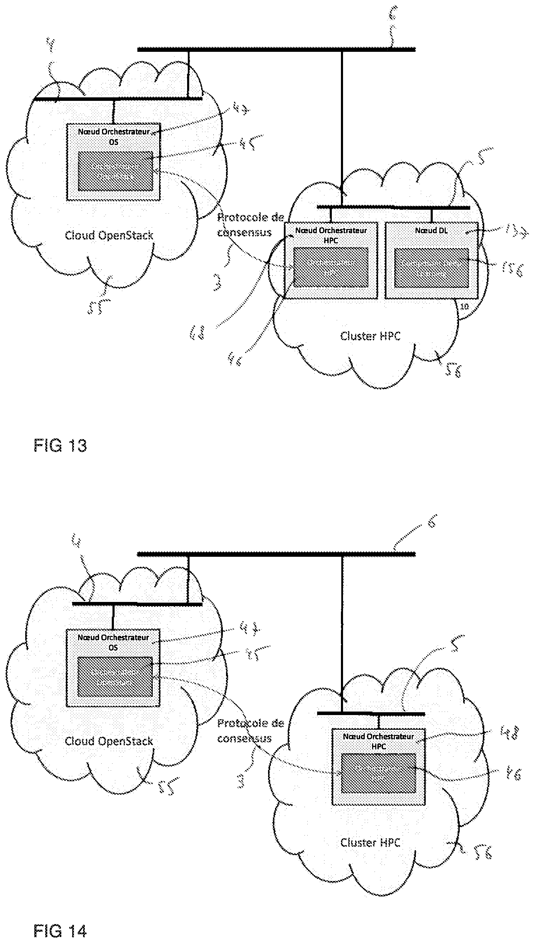

La figure 13 représente schématiquement encore un autre exemple de déploiement d'applications client chacune hébergée sur une même infrastructure dans un réseau informatique selon un mode de réalisation de l'invention.

La première infrastructure 55 de type « Cloud OpenStack » et son orchestrateur 45 de type « OpenStack », ainsi que la deuxième infrastructure 56 de type « Cluster HPC » et son orchestrateur 46 de type « HPC » sont les mêmes qu'au niveau de la figure 11.

Les orchestrateurs 45 et 46, gérant respectivement les infrastructures 55 et 56 de ressources, communiquent entre eux via l'interface de coopération 3 sur laquelle se déroule le protocole de consensus. Ce protocole de consensus a décidé d'héberger le composant 156 de l'application client dont les besoins étaient décrits au niveau de la figure 12, au niveau du nœud 137 relié au réseau 5 de la deuxième infrastructure 56.

Une demande de déploiement de l'application client est alors soumise à l'une des instances de l'essaim d'orchestrateurs 45 et 46. Soit, par exemple, une demande soumise à l'instance de l'orchestrateur 45. L'instance de cet orchestrateur 45 acquitte réception de la demande après avoir stocké le modèle de l'application client dans une base répartie entre les instances de l'essaim d'orchestrateurs, pour annoncer ensuite par le protocole de consensus qu'une nouvelle évaluation est ouverte pour héberger cette application client.

Chaque instance d'orchestrateur 45 ou 46 souhaitant participer à cette évaluation ouvre une session de durée de vie limitée qu'elle va devoir renouveler régulièrement pour prolonger sa durée de vie et ceci, tant qu'elle n'a pas annoncé par le protocole de consensus les résultats de sa propre évaluation. Si l'un des orchestrateurs 45 ou 46 subit une panne lors de son calcul, sa session est invalidée à la fin de sa durée de vie. Un orchestrateur peut aussi décider de ne pas participer à une évaluation, en particulier si ses ressources sont limitées ou si un opérateur l'a configuré pour refuser de nouveaux déploiements. L'évaluation prend fin quand toutes les sessions de participation à cette évaluation sont terminées. Ici, les deux instances des orchestrateurs 45 et 46 participent à cette évaluation.

Chaque instance d'orchestrateur 45 ou 46 déroule le processus de décision de placement tel que décrit au tableau 2 en liaison avec la figure 6, pour finalement annoncer, par l'utilisation du protocole de consensus, les scores d'adéquation pour l'application client. L'utilisation du protocole de consensus permet d'élire l'instance d'orchestrateur qui est la plus adaptée au déploiement de l'application client qui vient d'être évaluée. Ici, c'est l'infrastructure 56 qui est choisie. L'instance de l'orchestrateur 46 élue déroule ensuite le cycle de vie de déploiement des composants de l'application client.

La figure 14 représente schématiquement le même exemple d'essaim d'orchestrateurs que la figure 11, dans un réseau informatique selon un mode de réalisation de l'invention, mais cette fois-ci le protocole de consensus va se dérouler non plus seulement pour chaque application client, mais pour chaque composant de chaque application client, des composants différents d'une même application client pouvant se retrouver hébergés par différentes infrastructures.

Ici, l'application client va être déployée composant par composant, sur les deux infrastructures 55 et 56. L'application client hébergée sera donc une « application hybride ». Les deux instances respectives des orchestrateurs 45 et 46 sont liées entre elles par le protocole de consensus. Le réseau dans son ensemble supporte donc deux infrastructures 55 et 56 aux caractéristiques différentes. D'une part, l'infrastructure 56 offre une importante puissance de calcul et un réseau de communication interne à très haut débit et faible latence mais ceci, pour un coût d'utilisation élevé. A l'inverse, l'infrastructure 55 offre la possibilité de créer de nombreuses machines virtuelles à faible coût, mais avec une puissance de calcul moindre et un réseau plus lent.

Dans le cas d'une application client de type « gros volume de données » avec plusieurs tiers et des caractéristiques différentes selon les différents composants de cette application client. En effet, un composant d'application client de type « apprentissage en profondeur » ingère une très grande quantité de données et applique sur ces données des modèles mathématiques nécessitant beaucoup de mémoire et un réseau faible latence pour l'échange de ces données. En revanche, ensuite, une fois le modèle appliqué aux données volumineuses, les résultats, qui ont quant à eux une volumétrie bien moindre, sont stockés dans une base de données et une interface homme machine de type web est utilisée pour présenter ces résultats. Le composant « stockage et présentation » nécessite de la résilience, via la redondance et la distribution de charge, mais la puissance de calcul requise est beaucoup moins importante que le composant « apprentissage en profondeur ».

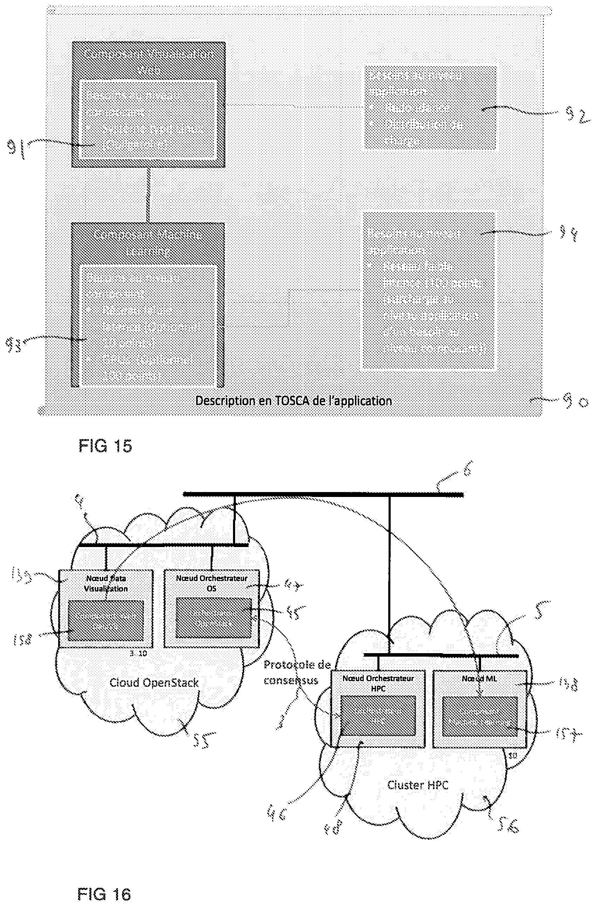

La figure 15 représente schématiquement une description en langage TOSCA des besoins d'une application client devant être hébergée sur plusieurs infrastructures différentes dans un réseau informatique selon un mode de réalisation de l'invention.

Cette description 90 comprend une description 91 des besoins au niveau composant pour un premier composant d'une application client et une description 92 des besoins au niveau application client pour ce premier composant de cette même application client, ainsi qu'une description 93 des besoins au niveau composant pour un deuxième composant de cette même application client et une description 94 des besoins au niveau application client pour ce deuxième composant de cette même application client.

La description 91 des besoins au niveau composant pour un premier composant « stockage et présentation » d'une application client spécifie de manière obligatoire un système de type Linux (marque déposée), sans quoi le score tombe et reste à 0 points.

La description 92 des besoins au niveau application client pour ce premier composant « stockage et présentation » de cette même application client spécifie, de manière optionnelle, de la redondance, ce qui rapporte 10 points supplémentaires, et de la distribution de charge, ce qui rapporte 10 points supplémentaires également pour le score d'évaluation.

La description 93 des besoins au niveau composant pour un deuxième composant « apprentissage en profondeur » de cette même application client spécifie un réseau de faible latence, ce qui augmente le score de 10 points, ainsi que la présence d'un processeur graphique, ce qui augmente le score de 100 points.

La description 94 des besoins au niveau application pour ce deuxième composant « apprentissage en profondeur » de cette même application client spécifie à nouveau un réseau de faible latence, ce qui augmente encore le score de 10 points : c'est à nouveau un exemple de surcharge au niveau application d'un besoin déjà spécifié au niveau composant.

La figure 16 représente schématiquement encore un autre exemple de déploiement d'applications client chacune hébergée sur plusieurs infrastructures différentes dans un réseau informatique selon un mode de réalisation de l'invention.

La première infrastructure 55 de type « Cloud OpenStack » et son orchestrateur 45 de type « OpenStack », ainsi que la deuxième infrastructure 56 de type « Cluster HPC » et son orchestrateur 46 de type « HPC » sont les mêmes qu'au niveau des figures 11, 13 et 14.

Les orchestrateurs 45 et 46 gérant respectivement les infrastructures 55 et 56 de ressources communiquent entre eux via l'interface de coopération 3 sur laquelle se déroule le protocole de consensus. Ce protocole de consensus a décidé d'héberger le premier composant 158 de l'application client dont les besoins étaient décrits au niveau de la figure 15, au niveau du nœud 139 relié au réseau 4 de la première infrastructure 55. Ce protocole de consensus a par contre décidé d'héberger le deuxième composant 157 de l'application client dont les besoins étaient décrits au niveau de la figure 15, au niveau du nœud 138 relié au réseau 5 de la deuxième infrastructure 56.

De la même manière qu'à la figure 13, les deux instances des orchestrateurs 45 et 46 participent à l'évaluation ouverte pour cette nouvelle application client.

Chaque instance d'orchestrateur 45 ou 46 déroule le processus de décision de placement tel que décrit au tableau 2 en liaison avec la figure 6, pour finalement annoncer, par l'utilisation du protocole de consensus, les scores d'adéquation pour chacun des composants de l'application client. L'utilisation du protocole de consensus permet d'élire l'instance d'orchestrateur qui est la plus adaptée au déploiement de chacun des composants 157 et 158 de l'application client qui viennent d'être évalués. Ici, c'est l'infrastructure 56 qui est choisie pour le composant 157, tandis que c'est l'infrastructure 55 qui est choisie pour le composant 158. L'instance de l'orchestrateur 46 élue pour le composant 157 déroule le cycle de vie de déploiement de ce composant 157, tandis que l'instance de l'orchestrateur 45 élue pour le composant 158 déroule le cycle de vie de déploiement de ce composant 158.

Chaque instance d'orchestrateur 45 ou 46 déroule ensuite le cycle de vie de déploiement du composant 158 ou 157 pour lequel elle a été élue responsable. Les instances d'orchestrateurs 45 et 46 se notifient l'une à l'autre leur état d'avancement respectif et se synchronisent entre elles dans leur avancement, par le protocole de consensus.

Un exemple où la synchronisation est critique est le cas d'un module se connectant à un autre. Par exemple, un module source de la connexion a besoin que le module cible soit dans l'état « démarré » avant que lui-même n'entre dans son état de « configuration ». Le protocole de consensus est là encore utilisé pour notifier les changements d'états et déclencher les transitions requises au moment adéquat.

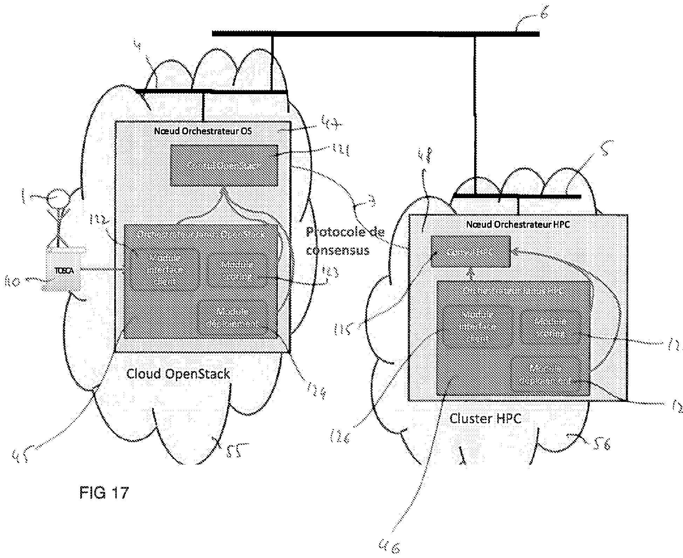

La figure 17 représente schématiquement un exemple de structure des orchestrateurs dans l'exemple d'essaim d'orchestrateurs des figures 11 et 14, dans un réseau informatique selon un mode de réalisation de l'invention.

Une première infrastructure 55 de type « Cloud OpenStack » comprend un réseau 4 auquel est relié un nœud orchestrateur 47 hébergeant un orchestrateur 45 de type « OpenStack ».

L'orchestrateur 45 comprend, un module interface client 122 chargé de récupérer la description 110 en langage TOSCA de l'application client auprès de l'opérateur 1, un module 123 d'évaluation de score chargé de récupérer les métadonnées de l'application client et de renvoyer le score correspondant, pour le composant d'application client concerné ou pour l'application client concernée, un module de déploiement 124 de l'application client ou de l'un de ses composants chargé de lire les métadonnées de l'application client et les autres informations de déploiement de cette application client. Ces trois modules 122 à 124 communiquent, entre eux et vers l'extérieur de l'orchestrateur 45, via un module d'entrée/sortie 121 de cet orchestrateur 45 localisé sur le nœud 47 et apte à communiquer avec les autres orchestrateurs de l'essaim sur l'interface de coopération 3.

Une deuxième infrastructure 56 de type « Cluster HPC » (HPC pour « High Performance Computing » en langue anglaise) comprend un réseau 5 auquel est relié un nœud orchestrateur 48 hébergeant un orchestrateur 46 de type « HPC ».

L'orchestrateur 46 comprend, un module interface client 126 chargé de pouvoir également le cas échéant récupérer une description en langage TOSCA de l'application client auprès d'un opérateur, un module 127 d'évaluation de score chargé de récupérer les métadonnées de l'application client et de renvoyer le score correspondant, pour le composant d'application client concerné ou pour l'application client concernée, un module de déploiement 128 de l'application client ou de l'un de ses composants chargé de lire les métadonnées de l'application client et les autres informations de déploiement de cette application client. Ces trois modules 126 à 128 communiquent, entre eux et vers l'extérieur de l'orchestrateur 46, via un module d'entrée/sortie 125 de cet orchestrateur 46 localisé sur le nœud 48 et apte à communiquer avec les autres orchestrateurs de l'essaim sur l'interface de coopération 3.

Les orchestrateurs 45 et 46 gérant respectivement les infrastructures 55 et 56 de ressources communiquent entre eux via l'interface de coopération 3 sur laquelle se déroule le protocole de consensus.

## Revendications

1. Réseau informatique comprenant un groupe de plusieurs infrastructures (51 à 56) de ressources de calcul parmi lesquelles :
➢ chaque infrastructure (51 à 56) comprend plusieurs ressources de calcul distinctes entre elles mais gérées par un même gestionnaire de ressources,
➢ chaque infrastructure (51 à 56) est associée à un orchestrateur (41 à 46) chargé d'affecter les ressources de cette infrastructure (51 à 56) à une ou plusieurs applications client (17), ledit réseau étant **caractérisé en ce que** :
➢ lesdits orchestrateurs (41 à 46) sont réunis en un essaim dans lequel :
∘ lesdits orchestrateurs (41 à 46) sont reliés entre eux par une interface de coopération (3),
∘ l'affectation de ressources de l'une ou de l'autre des infrastructures (51 à 56) du groupe, à une application client (17), pour héberger tout ou partie de cette application client (17), est décidée par un procédé de décision basé sur :
■ d'abord des évaluations des possibilités de satisfaire les besoins de cette application client (17), respectivement distribuées chez les orchestrateurs (41 à 46) de cet essaim,
■ ensuite, un protocole de consensus, entre les orchestrateurs (41 à 46) de l'essaim, qui :
• est basé sur lesdites évaluations,
• est réalisé au niveau de l'interface de coopération (3),
• choisit l'une des infrastructures (51 à 56) du groupe pour héberger tout ou partie de l'application client (17), ladite application client (17) étant ensuite déployée sur l'infrastructure choisie.

2. Réseau informatique selon la revendication 1, **caractérisé en ce que** ledit procédé de décision comprend les étapes successives suivantes :
➢ une première étape de demande de déploiement de tout ou partie d'une application client (17) auprès de l'un des orchestrateurs (41 à 46) de l'essaim,
➢ une deuxième étape de diffusion des besoins de tout ou partie de ladite application client (17) à tous les orchestrateurs (41 à 46) de l'essaim, sur leur interface de coopération (3),
➢ une troisième étape de notification de participation ou non aux évaluations par les orchestrateurs (41 à 46) de l'essaim, sur leur interface de coopération (3),
➢ une quatrième étape de réalisation de l'évaluation par calcul d'un score pour tout ou partie de ladite application client (17) par chacun des orchestrateurs (41 à 46) participant aux évaluations,
➢ une cinquième étape d'accord, par le protocole de consensus, sur le choix de celle des infrastructures (51 à 56) du groupe, pour héberger tout ou partie de ladite application client (17), qui a réalisé le meilleur score,
➢ une sixième étape de déploiement de tout ou partie de ladite application (17) sur l'infrastructure choisie (51 à 56).

3. Réseau informatique selon la revendication 1 ou 2, **caractérisé en ce que** :
➢ toute l'application client (17) est évaluée en une seule fois et est affectée à une seule infrastructure (51 à 56).

4. Réseau informatique selon la revendication 1 ou 2, **caractérisé en ce que** chaque composant (21 à 28) de l'application client est évalué séparément et est affecté à une seule infrastructure (51 à 56), deux composants (21 à 28) distincts d'une même application client (17) pouvant être affectés respectivement à deux infrastructures (51 à 56) différentes du groupe, un composant (21 à 28) d'application client (17) étant une unité de déploiement de cette application (17) sur l'une des infrastructures (51 à 56) du groupe, un composant étant de préférence une machine physique ou une machine virtuelle ou un conteneur,
de préférence **en ce que** ladite étape de déploiement comprend les phases suivantes :
➢ une première phase de lancement de plusieurs déploiements de plusieurs composants (21 à 28) distincts d'une même application client (17) réalisés en parallèle sur plusieurs infrastructures (51 à 56) différentes choisies dans un même groupe,
➢ une deuxième phase de synchronisation desdits déploiements entre eux, au cours desdits déploiements,
➢ une troisième phase de mise à jour des relations entre les différents composants (21 à 28) de cette même application client (17) hébergés sur les différentes infrastructures (51 à 56) de ce même groupe,
➢ une quatrième phase de requête de compte-rendu des déploiements, par un opérateur (1, 2) de l'application client (17), auprès de l'un des orchestrateurs (41 à 46) de l'essaim,
➢ une cinquième phase d'accès à l'état des déploiements, par l'intermédiaire de l'interface de coopération (3), par cet orchestrateur (41 à 46),
➢ une sixième phase d'envoi de compte-rendu de l'état des déploiements, par cet orchestrateur (41 à 46), vers l'opérateur (1, 2) de l'application client (17),
et de préférence **en ce que** plusieurs desdites, de préférence toutes les, infrastructures (51 à 56) d'un même groupe pouvant héberger les différents composants (21 à 28) d'une même application client (17) sont hétérogènes entre elles.

5. Réseau informatique selon la revendication 4, rattachée à la revendication 2, **caractérisé en ce que** ledit calcul de score pour un composant (21 à 28) d'une application client (17) intègre aussi le score des autres composants (21 à 28) de la même application client (17) de manière à privilégier la localisation des différents composants (21 à 28) d'une même application client (17) sur la même infrastructure (51 à 56).

6. Réseau informatique selon l'une quelconque des revendications 4 à 5, rattachées à la revendication 2, **caractérisé en ce que** chaque orchestrateur (41 à 46) d'un même groupe embarque sa propre logique de calcul de score pour réaliser une évaluation, intégrant aussi bien la spécificité du type d'infrastructure associée que son contexte d'utilisation.

7. Réseau informatique selon l'une quelconque des revendications précédentes, **caractérisé en ce qu'**un opérateur (1, 2) de l'application client (17) contacte l'un quelconque des orchestrateurs (41 à 46) de l'essaim, pour requérir l'hébergement de tout ou partie de ladite application (17).

8. Réseau informatique selon l'une quelconque des revendications précédentes, **caractérisé en ce qu'**après réception, par un orchestrateur (41 à 46), d'une requête d'hébergement d'une application client (17), cet orchestrateur (41 à 46) diffuse tout ou partie des métadonnées (14) de cette application client (17) aux autres orchestrateurs orchestrateur (41 à 46) de l'essaim pour leurs évaluations respectives.

9. Réseau informatique selon l'une quelconque des revendications précédentes, **caractérisé en ce que**, pour réaliser son évaluation de ses possibilités de satisfaire les besoins d'une application client (17), chaque orchestrateur (41 à 46) de l'essaim ouvre une session de durée prédéterminée, éventuellement renouvelable avant fin de sessions, la fin de toutes les sessions des orchestrateurs de l'essaim déclenchant ledit protocole de consensus.

10. Réseau informatique selon l'une quelconque des revendications précédentes, **caractérisé en ce que** chaque orchestrateur (41 à 46) de l'essaim possède son propre mode d'évaluation de ses possibilités de satisfaire les besoins d'une application client (17), ce mode d'évaluation étant modifiable auprès de chaque orchestrateur (41 à 46) de l'essaim par l'intermédiaire d'un branchement d'un module de logique d'évaluation.

11. Réseau informatique selon l'une quelconque des revendications précédentes, **caractérisé en ce qu'**un orchestrateur (41 à 46) peut décider d'abandonner une évaluation en cours pour une application client (17), si cette application client (17) présente un profil particulier inadapté à l'infrastructure (51 à 56) de cet orchestrateur (41 à 46).

12. Réseau informatique selon l'une quelconque des revendications précédentes, **caractérisé en ce qu'**un opérateur (41 à 46) de l'application client (17) utilise une interface client (31, 32) de l'orchestrateur (41 à 46) pour découvrir le type de ressources supportées par l'infrastructure (51 à 56) associée à cet orchestrateur (41 à 46) et requérir un déploiement d'application à cet orchestrateur (41 à 46).

13. Réseau informatique selon l'une quelconque des revendications précédentes, **caractérisé en ce que** chaque orchestrateur (41 à 46) de l'essaim refuse de participer aux évaluations si ses ressources sont trop limitées ou s'il a été paramétré pour refuser de nouveaux déploiements d'application.

14. Réseau informatique selon l'une quelconque des revendications précédentes, **caractérisé en ce qu'**un nouvel orchestrateur (41 à 46) communique ses types de ressources et ses capacités sur son interface de coopération (3) aux autres orchestrateurs (41 à 46) d'un essaim pour être intégré dans leur essaim.

15. Réseau informatique selon l'une quelconque des revendications précédentes, **caractérisé en ce qu'**au moins l'un des, de préférence plusieurs, encore plus de préférence tous les, orchestrateurs (41 à 46) de l'essaim incluent chacun :
➢ un module de communication (121, 125) avec les autres orchestrateurs (41 à 46) de l'essaim sur l'interface de coopération (3),
➢ un module d'interface client (122, 126) pour communiquer avec les opérateurs (1, 2) des applications client (17),
➢ un module de calcul de score (123, 127) pour l'application client (17) dont les besoins lui sont communiqués,
➢ un module de déploiement (124, 128) d'une application client (17) sur l'infrastructure (51 à 56) associée audit orchestrateur (41 à 46),
➢ les modules d'interface client (122, 126), de calcul de score (123, 127) et de déploiement (124, 128) d'une application (17) communiquant tous avec le module de communication (121, 125).

16. Procédé de décision d'affectation de ressources de calcul, de l'une ou de l'autre des infrastructures (51 à 56) de ressources de calcul d'un même groupe d'infrastructures (51 à 56) d'un réseau informatique, à tout ou partie d'une application client (17) pour l'héberger, basé sur :
➢ d'abord des évaluations, distribuées chez les orchestrateurs (41 à 46) respectifs desdites infrastructures (51 à 56), des possibilités de satisfaire les besoins de ladite application client (17),
➢ ensuite, un protocole de consensus entre lesdits orchestrateurs (41 à 46) qui :
∘ est basé sur lesdites évaluations,
∘ est réalisé au niveau d'une interface de coopération (3) reliant entre eux lesdits orchestrateurs (41 à 46) d'un même essaim associé audit groupe d'infrastructures (51 à 56),
∘ choisit l'une desdites infrastructures (51 à 56) dudit groupe pour héberger tout ou partie de ladite application client (17), ladite application client (17) étant ensuite déployée sur l'infrastructure choisie en lui affectant tout ou partie des ressources de l'infrastructure choisie (51 à 56),
➢ chaque infrastructure (51 à 56) comprenant plusieurs ressources de calcul distinctes entre elles mais gérées par un même gestionnaire de ressources,
➢ chaque infrastructure (51 à 56) étant associée à un orchestrateur (41 à 46) chargé d'affecter les ressources de cette infrastructure (51 à 56) à une ou plusieurs applications client (17).

## Patentansprüche

1. Computernetzwerk, das eine Gruppe mehrerer Infrastrukturen (51 bis 56) von Rechenressourcen umfasst, von denen:
> jede Infrastruktur (51 bis 56) mehrere Rechenressourcen umfasst, die voneinander verschieden sind, aber von demselben Ressourcen-Manager verwaltet werden,
> jede Infrastruktur (51 bis 56) einem Orchestrator (41 bis 46) zugeordnet ist, der für die Zuweisung der Ressourcen dieser Infrastruktur (51 bis 56) an eine oder mehrere Client-Anwendungen (17) verantwortlich ist,
wobei das Netzwerk **dadurch gekennzeichnet ist, dass**
> die Orchestratoren (41 bis 46) in einem Schwarm vereint sind, wobei:
∘ die Orchestratoren (41 bis 46) durch eine Kooperationsschnittstelle (3) miteinander verbunden sind,
∘ die Zuweisung von Ressourcen von der einen oder anderen der Infrastrukturen (51 bis 56) der Gruppe zu einer Client-Anwendung (17), um diese Client-Anwendung (17) ganz oder teilweise zu hosten, durch ein Entscheidungsverfahren entschieden wird, auf Basis von:
■ zunächst Bewertungen der Möglichkeiten zur Befriedigung der Bedürfnisse dieser Client-Anwendung (17), jeweils verteilt auf die Orchestratoren (41 bis 46) dieses Schwarms,
■ dann einem Konsensprotokoll zwischen den Orchestratoren (41 bis 46) des Schwarms, das:
• auf diesen Bewertungen beruht,
• auf Ebene der Kooperationsschnittstelle (3) erfolgt,
• eine der Infrastrukturen (51 bis 56) der Gruppe auswählt, um die Client-Anwendung (17) ganz oder teilweise zu hosten, wobei die Client-Anwendung (17) anschließend auf der ausgewählten Infrastruktur implementiert wird.

2. Computernetzwerk nach Anspruch 1, **dadurch gekennzeichnet, dass** das Entscheidungsverfahren die folgenden aufeinanderfolgenden Schritte umfasst:
> einen ersten Schritt des Anforderns der Implementierung der gesamten oder eines Teils einer Client-Anwendung (17) bei einem der Orchestratoren (41 bis 46) des Schwarms,
> einen zweiten Schritt des Versendens der Anforderungen der gesamten oder eines Teils der Client-Anwendung (17) an alle Orchestratoren (41 bis 46) des Schwarms auf ihrer Kooperationsschnittstelle (3),
> einen dritten Schritt der Benachrichtigung über die Teilnahme oder Nichtteilnahme an den Bewertungen durch die Orchestratoren (41 bis 46) des Schwarms auf ihrer Kooperationsschnittstelle (3),
> einen vierten Schritt zum Ausführen der Bewertung durch Berechnen eines Bewertungsergebnis für die gesamte oder einen Teil der Client-Anwendung (17) durch jeden der Orchestratoren (41 bis 46), die an den Bewertungen teilnehmen,
> einen fünften Schritt, um durch das Konsens-Protokoll ein Einvernehmen über die Auswahl derjenigen der Infrastrukturen (51 bis 56) der Gruppe zu erzielen, um die gesamte oder einen Teil der Client-Anwendung (17) zu hosten, die das beste Bewertungsergebnis erzielt hat,
> einen sechsten Schritt der Implementierung der gesamten oder eines Teils der Anwendung (17) auf der ausgewählten Infrastruktur (51 bis 56).

3. Computernetzwerk nach Anspruch 1 oder 2, **dadurch gekennzeichnet, dass**:
> die gesamte Client-Anwendung (17) auf einmal bewertet und einer einzelnen Infrastruktur (51 bis 56) zugewiesen wird.

4. Computernetzwerk nach Anspruch 1 oder 2, **dadurch gekennzeichnet, dass** jede Komponente (21 bis 28) der Client-Anwendung separat bewertet und einer einzigen Infrastruktur (51 bis 56) zugeordnet wird, wobei zwei verschiedene Komponenten (21 bis 28) der gleichen Client Anwendung (17) jeweils zwei unterschiedlichen Infrastrukturen (51 bis 56) der Gruppe zugeordnet werden können, wobei eine Komponente (21 bis 28) der Client-Anwendung (17) eine Einheit zur Implementierung dieser Anwendung (17) auf einer der Infrastrukturen (51 bis 56) der Gruppe ist, wobei eine Komponente vorzugsweise eine physische Maschine oder eine virtuelle Maschine oder ein Container ist,
wobei vorzugsweise der Schritt der Implementierung die folgenden Phasen umfasst:
> eine erste Phase des Starts mehrerer Implementierungen mehrerer unterschiedlicher Komponenten (21 bis 28) derselben Client-Anwendung (17), die parallel auf mehreren unterschiedlichen Infrastrukturen (51 bis 56) ausgeführt werden, die aus derselben Gruppe ausgewählt sind,
> eine zweite Phase der Synchronisierung der Implementierungen miteinander während der Implementierungen,
> eine dritte Phase der Aktualisierung der Beziehungen zwischen den verschiedenen Komponenten (21 bis 28) derselben Client-Anwendung (17), die auf den verschiedenen Infrastrukturen (51 bis 56) derselben Gruppe gehostet werden,
> eine vierte Phase des Anforderns eines Berichts über die Implementierungen durch einen Operator (1, 2) der Client-Anwendung (17) bei einem der Orchestratoren (41 bis 46) des Schwarms,
> eine fünfte Phase des Zugriffs auf den Stand der Implementierungen über die Kooperationsschnittstelle (3) durch diesen Orchestrator (41 bis 46),
> eine sechste Phase des Sendens eines Berichts über den Zustand der Implementierungen durch diesen Orchestrator (41 bis 46) an den Operator (1, 2) der Client-Anwendung (17),
und bevorzugt dadurch, dass mehrere, vorzugsweise alle Infrastrukturen (51 bis 56) derselben Gruppe, die die verschiedenen Komponenten (21 bis 28) derselben Client-Anwendung (17) hosten können, heterogen zueinander sind.

5. Computernetzwerk nach Anspruch 4, rückbezogen auf Anspruch 2, **dadurch gekennzeichnet, dass** die Berechnung des Bewertungsergebnis für eine Komponente (21 bis 28) einer Client-Anwendung (17) auch das Bewertungsergebnis der anderen Komponenten (21 bis 28) derselben Client-Anwendung (17) einbezieht, um die Anordnung der verschiedenen Komponenten (21 bis 28) derselben Client-Anwendung (17) auf derselben Infrastruktur (51 bis 56) zu privilegieren.

6. Computernetzwerk nach einem der Ansprüche 4 bis 5, rückbezogen auf Anspruch 2, **dadurch gekennzeichnet, dass** jeder Orchestrator (41 bis 46) derselben Gruppe seine eigene Berechnungslogik für das Bewertungsergebnis anwendet, um eine Bewertung durchzuführen, die sowohl die Besonderheit des Typs der zugehörigen Infrastruktur als auch deren Nutzungskontext einbezieht.

7. Computernetzwerk nach einem der vorhergehenden Ansprüche, **dadurch gekennzeichnet, dass** ein Operator (1, 2) der Client-Anwendung (17) einen der Orchestratoren (41 bis 46) des Schwarms kontaktiert, um das Hosting der gesamten Anwendung (17) oder eines Teils davon anzufordern.

8. Computernetzwerk nach einem der vorangehenden Ansprüche, **dadurch gekennzeichnet, dass** nach dem Empfang einer Anfrage zum Hosten einer Client-Anwendung (17) durch einen Orchestrator (41 bis 46) dieser Orchestrator (41 bis 46) alle oder einen Teil der Metadaten (14) dieser Client-Anwendung (17) an die anderen Orchestrator Orchestratoren (41 bis 46) des Schwarms für ihre jeweiligen Bewertungen versendet.

9. Computernetzwerk nach einem der vorhergehenden Ansprüche, **dadurch gekennzeichnet, dass** jeder Orchestrator (41 bis 46) des Schwarms zur Durchführung seiner Bewertung seiner Möglichkeiten zur Befriedigung der Bedürfnisse einer Client-Anwendung (17) eine Sitzung von vorbestimmter Dauer eröffnet, die möglicherweise vor dem Ende der Sitzungen verlängert werden kann, wobei das Ende aller Sitzungen der Orchestratoren des Schwarms das Konsensprotokoll auslöst.

10. Computernetzwerk nach einem der vorhergehenden Ansprüche, **dadurch gekennzeichnet, dass** jeder Orchestrator (41 bis 46) des Schwarms seinen eigenen Bewertungsmodus für seine Möglichkeiten zum Befriedigen der Bedürfnisse einer Client-Anwendung (17) aufweist, wobei dieser Bewertungsmodus bei jedem Orchestrator (41 bis 46) des Schwarms über einen Anschluss an ein Bewertungs-Logikmodul modifizierbar ist.

11. Computernetzwerk nach einem der vorhergehenden Ansprüche, **dadurch gekennzeichnet, dass** ein Orchestrator (41 bis 46) entscheiden kann, eine laufende Bewertung für eine Client-Anwendung (17) abzubrechen, wenn diese Client-Anwendung (17) ein bestimmtes Profil aufweist, das ungeeignet für die Infrastruktur (51 bis 56) dieses Orchestrators (41 bis 46) ist.

12. Computernetzwerk nach einem der vorhergehenden Ansprüche, **dadurch gekennzeichnet, dass** ein Operator (41 bis 46) der Client-Anwendung (17) eine Client-Schnittstelle (31, 32) des Orchestrators (41 bis 46) verwendet, um den Typ von Ressourcen zu entdecken, die von der Infrastruktur (51 bis 56) unterstützt werden, welche diesem Orchestrator (41 bis 46) zugeordnet ist, und um eine Implementierung der Anwendung für diesen Orchestrator (41 bis 46) anzufordern.

13. Computernetzwerk nach einem der vorhergehenden Ansprüche, **dadurch gekennzeichnet, dass** jeder Orchestrator (41 bis 46) des Schwarms die Teilnahme an den Bewertungen verweigert, wenn seine Ressourcen zu begrenzt sind oder wenn er so konfiguriert wurde, dass er neue Implementierungen der Anwendung verweigert.

14. Computernetzwerk nach einem der vorhergehenden Ansprüche, **dadurch gekennzeichnet, dass** ein neuer Orchestrator (41 bis 46) seine Typen von Ressourcen und seine Kapazitäten über seine Kooperationsschnittstelle (3) den anderen Orchestratoren (41 bis 46) eines Schwarms mitteilt, um in ihren Schwarm integriert zu werden.

15. Computernetzwerk nach einem der vorhergehenden Ansprüche, **dadurch gekennzeichnet, dass** mindestens einer der, vorzugsweise mehrere der, noch bevorzugter alle Orchestratoren (41 bis 46) des Schwarms jeweils umfassen:
> ein Kommunikationsmodul (121, 125) zur Kommunikation mit den anderen Orchestratoren (41 bis 46) des Schwarms auf der Kooperationsschnittstelle (3),
> ein Client-Schnittstellenmodul (122, 126) zum Kommunizieren mit den Operatoren (1, 2) der Client-Anwendungen (17),
> ein Bewertungsergebnis-Berechnungsmodul (123, 127) für die Client-Anwendung (17), deren Bedürfnisse diesem mitgeteilt werden,
> ein Implementierungsmodul (124, 128) einer Client-Anwendung (17) auf der Infrastruktur (51 bis 56), die dem Orchestrator (41 bis 46) zugeordnet ist,
> wobei das Client-Schnittstellenmodul (122, 126), das Bewertungsergebnis-Berechnungsmodul (123, 127) und das Implementierungsmodul (124, 128) einer Anwendung (17) alle mit dem Kommunikationsmodul (121, 125) kommunizieren.

16. Verfahren zum Entscheiden über die Zuweisung von Rechenressourcen der einen oder anderen der Infrastrukturen (51 bis 56) von Rechenressourcen derselben Gruppe von Infrastrukturen (51 bis 56) eines Computernetzwerks an die gesamte oder einen Teil einer Client-Anwendung (17), um sie zu hosten, auf Basis von:
> zunächst Bewertungen der Möglichkeiten zur Befriedigung der Bedürfnisse der Client-Anwendung (17), verteilt auf die jeweiligen Orchestratoren (41 bis 46) der Infrastrukturen (51 bis 56),
> dann einem Konsensprotokoll zwischen den Orchestratoren (41 bis 46), das:
∘ auf diesen Bewertungen basiert,
∘ auf der Ebene einer Kooperationsschnittstelle (3) durchgeführt wird, die die Orchestratoren (41 bis 46) desselben Schwarms verbindet, welcher der Gruppe von Infrastrukturen (51 bis 56) zugeordnet ist,
∘ eine der Infrastrukturen (51 bis 56) der Gruppe auswählt, um die gesamte Client-Anwendung (17) oder einen Teil davon zu hosten, indem ihr alle oder ein Teil der Ressourcen der ausgewählten Infrastruktur (51 bis 56) zugewiesen werden, wobei die Client-Anwendung (17) anschließend auf der ausgewählten Infrastruktur implementiert wird,
> wobei jede Infrastruktur (51 bis 56) mehrere Rechenressourcen umfasst, die voneinander verschieden sind, aber von demselben Ressourcenmanager verwaltet werden,
> wobei jede Infrastruktur (51 bis 56) einem Orchestrator (41 bis 46) zugeordnet ist, der für die Zuweisung der Ressourcen dieser Infrastruktur (51 bis 56) an eine oder mehrere Client-Anwendungen (17) verantwortlich ist.

## Claims

1. A computer network comprising a group of several computing resource infrastructures (51 to 56) of which:
➢ each infrastructure (51 to 56) comprises several computing resources distinct from each other but managed by a same resource manager,
➢ each infrastructure (51 to 56) is associated with an orchestrator (41 to 46) in charge of allocating the resources of this infrastructure (51 to 56) to one or several client application(s) (17),
said network being **characterised in that**:
➢ said orchestrators (41 to 46) are grouped together into a swarm in which:
∘ said orchestrators (41 to 46) are interconnected by a cooperation interface (3),
∘ the allocation of resources of either one of the infrastructures (51 to 56) of the group, to a client application (17), in order to host all or part of this client application (17) is decided by a decision process based on:
■ first, evaluations of the possibilities to meet the needs of this client application (17), respectively distributed over the orchestrators (41 to 46) of this swarm,
■ afterwards, a consensus protocol, between the orchestrators (41 to 46) of the swarm, which:
• is based on said evaluations,
• is carried out at the cooperation interface (3),
• selects one of the infrastructures (51 to 56) of the group in order to host all or part of the client application (17), said client application (17) being then deployed on the selected infrastructure.

2. The computer network according to claim 1, **characterised in that** said decision method comprises the following successive steps:
➢ a first step of requesting the deployment of all or part of a client application (17) before one of the orchestrators (41 to 46) of the swarm,
➢ a second step of broadcasting the needs of all or part of said client application (17) to all orchestrators (41 to 46) of the swarm, over their cooperation interface (3),
➢ a third step of notifying a participation of the orchestrators (41 to 46), or not, in the evaluations, over their cooperation interface (3),
➢ a fourth step of carrying out the evaluation, by computation, of a score for all or part of said client application (17) by each of the orchestrators (41 to 46) participating in the evaluations,
➢ a fifth step of agreeing, through the consensus protocol, on the selection of which infrastructure (51 to 56) of the group has achieved the best score for hosting all or part of said client application (17),
➢ a sixth step of deploying all or part of said application (17) in the selected infrastructure (51 to 56).

3. The computer network according to claim 1 or 2, **characterised in that**:
➢ the entire client application (17) is evaluated at one time and is allocated to a single infrastructure (51 to 56).

4. The computer network according to claim 1 or 2, **characterised in that** each component (21 to 28) of the client application is evaluated separately and is allocated to a single infrastructure (51 to 56), two distinct components (21 to 28) of a same client application (17) could be allocated respectively to two different infrastructures (51 to 56) of the group, a component (21 to 28) of the client application (17) being a unit for deploying this application (17) on one of the infrastructures (51 to 56) of the group, a component being preferably a physical machine or a virtual machine or a container,
preferably **in that** said deployment step comprises the following phases:
➢ a first phase of launching several deployments of several distinct components (21 to 28) of a same client application (17), carried out in parallel on several different infrastructures (51 to 56) selected in a same group,
➢ a second phase of synchronising said deployments with each other, during said deployments,
➢ a third phase of updating the relationships between the different components (21 to 28) of this same client application (17) hosted on the different infrastructures (51 to 56) of this same group,
➢ a fourth phase of requesting a report on the deployment, by an operator (1, 2) of the client application (17), before one of the orchestrators (41 to 46) of the swarm,
➢ a fifth phase of accessing the status of the deployments, via the cooperation interface (3), by this orchestrator (41 to 46),
➢ a sixth phase of sending the report on the status of the deployments, by this orchestrator (41 to 46), to the operator (1, 2) of the client application (17),
and preferably **in that** several ones, preferably all, of the infrastructures (51 to 56) of a same group could host the different components (21 to 28) of a same client application (17) are heterogeneous from each other.

5. The computer network according to claim 4, in combination with claim 2, **characterised in that** said score computation for a component (21 to 28) of a client application (17) also integrates the score of the other components (21 to 28) of the same client application (17), so as to favour setting the different components (21 to 28) of a same client application (17) on the same infrastructure (51 to 56).

6. The computer network according to any one of claims 4 to 5, in combination with claim 2, **characterised in that** each orchestrator (41 to 46) of a same group embeds its own score computation logic for carrying out an evaluation, integrating both the specific nature of the type of associated infrastructure and the context of use thereof.

7. The computer network according to any one of the preceding claims, **characterised in that** an operator (1, 2) of the client application (17) contacts any one of the orchestrators (41 to 46) of the swarm, in order to request hosting of all or part of said application (17).

8. The computer network according to any one of the preceding claims, **characterised in that**, after reception, by an orchestrator (41 to 46), of a request to host a client application (17), this orchestrator (41 to 46) broadcasts all or part of the metadata (14) of this client application (17) to the other orchestrators (41 to 46) of the swarm for their respective evaluations.

9. The computer network according to any one of the preceding claims, **characterised in that**, in order to carry out its evaluation of its possibilities to meet the needs of a client application (17), each orchestrator (41 to 46) of the swarm opens a session with a predetermined duration, possibly renewable before end of the sessions, the end of all sessions of the orchestrators of the swarm triggering said consensus protocol.

10. The computer network according to any one of the preceding claims, **characterised in that** each orchestrator (41 to 46) of the swarm has its own mode of evaluating of its possibilities to meet the needs of a client application (17), this evaluation mode being modifiable before each orchestrator (41 to 46) of the swarm through a connection of an evaluation logic module.

11. The computer network according to any one of the preceding claims, **characterised in that** an orchestrator (41 to 46) could decide to withdraw an evaluation in progress for a client application (17), if this client application (17) has a particular profile that is unsuitable for the infrastructure (51 to 56) of this orchestrator (41 to 46).

12. The computer network according to any one of the preceding claims, **characterised in that** an operator (41 to 46) of the client application (17) uses a client interface (31, 32) of the orchestrator (41 to 46) to discover the type of resources supported by the infrastructure (51 to 56) associated with this orchestrator (41 to 46) and to request a deployment of an application from this orchestrator (41 to 46).

13. The computer network according to any one of the preceding claims, **characterised in that** each orchestrator (41 to 46) of the swarm refuses to participate in the evaluations if its resources are too limited or if it has been parameterised to refuse new application deployments.

14. The computer network according to any one of the preceding claims, **characterised in that** a new orchestrator (41 to 46) communicates its types of resources and its capabilities, over its cooperation interface (3), to the other orchestrators (41 to 46) of a swarm in order to be integrated into their swarm.

15. The computer network according to any one of the preceding claims, **characterised in that** at least one, preferably several ones, even more preferably all, of the orchestrators (41 to 46) of the swarm include(s), each:
➢ a module (121, 125) for communicating with the other orchestrators (41 to 46) of the swarm over the cooperation interface (3),
➢ a client interface module (122, 126) for communicating with the operators (1, 2) of the client applications (17),
➢ a score computation module (123, 127) for the client application (17) whose needs are communicated thereto,
➢ a module (124, 128) for deploying a client application (17) on the infrastructure (51 to 56) associated with said orchestrator (41 to 46),
➢ all of the client interface (122, 126), score computation (123, 127) and deployment (124, 128) modules of an application (17) communicating with the communication module (121, 125).

16. A method for deciding on the allocation of the computing resources, of either one of the computing resource infrastructures (51 to 56) of a same group of infrastructures (51 to 56) of a computer network, to all or part of a client application (17) in order to host it, based on:
➢ first, evaluations, distributed over the respective orchestrators (41 to 46) of said infrastructures (51 to 56), of the possibilities to meet the needs of said client application (17),
➢ afterwards, a consensus protocol between said orchestrators (41 to 46), which:
∘ is based on said evaluations,
∘ is carried out at a cooperation interface (3) interconnecting said orchestrators (41 to 46) of a same swarm associated with said group of infrastructures (51 to 56),
∘ selects one of said infrastructures (51 at 56) of said group in order to host all or part of said client application (17), said client application (17) being then deployed on the selected infrastructure, by allocating all or part of the resources of the selected infrastructure (51 to 56) thereto,
➢ each infrastructure (51 to 56) comprising several computing resources distinct from each other but managed by a same resource manager,
➢ each infrastructure (51 to 56) being associated with an orchestrator (41 to 46) in charge of allocating the resources of this infrastructure (51 to 56) to one or several client application(s) (17).
